# EUROPEAN PATENT APPLICATION

(11) **EP 1 693 670 A1**
(43) Date of publication of application: **23.08.2006**
(21) Application number: 04819948.3
(22) Date of filing: 03.12.2004
(51) Int. Cl.: G01N 33/48, C12M 1/00, C12M 1/34, C12N 15/09

(54) **REACTION VESSEL AND REACTION DEVICE USING THE SAME, DETECTION DEVICE AND REACTION VESSEL PRODUCING METHOD**

(30) Priority: 04.12.2003 JP 2003405789
(71) Applicant: Olympus Corporation, Tokyo 151-0072 (JP)
(72) Inventor: SHIBAZAKI, Takami OLYMPUS Int. Prop.Services, Hachioji-shi, Tokyo 192-8512 (JP); FUKUOKA, Morinao OLYMPUS Int. Prop. Services, Hachioji-shi, Tokyo 192-8512 (JP); AKIMOTO, Yoshinobu OLYMPUS Int. Prop. Services, Hachioji-shi, Tokyo 192-8512 (JP)
(74) Representative: von Hellfeld, Axel
(86) International application number: PCT/JP2004/018063
(87) International publication number: WO 2005/054844

(57) **Abstract**

A reaction vessel (101) includes a three-dimensional substrate (102) on which probes for detecting biorelated substances are immobilized, a coupling portion (103) which is to be coupled to an examination apparatus, a solution sucking portion (104) which is allowed to suck a solution. The examination apparatus includes a fitting portion (111) which is allowed to be fitted on the coupling portion (103) of the reaction vessel (101), a pressure controller (112) which controls the pressure of the reaction vessel (101) through the fitting portion (111), a biaxial robot (113) which movably supports the fitting portion (111), a sample vessel (114) which stores a sample solution, a cleaning fluid vessel (115) which stores a cleaning fluid, a heater (116) which can house the reaction vessel (101), a temperature measuring resistor (117) for measuring the temperature of the heater (116), and a temperature controller (118) which controls the temperature of the heater (116).

## Description

### Technical Field

The present invention relates to a reaction vessel provided for the detection of biorelated substances, and a reaction apparatus and a detection apparatus using the reaction vessel.

### Background Art

Analysis has recently been performed on the genes of many creatures including human beings and many plants including rice. In the recent years, there has been developed a new examination method using a DNA chip having DNAs regularly sequenced on a semiconductor or the like or a DNA microarray. According to this new examination method, a plurality of genes can be simultaneously examined.

The present applicant has proposed a gene examination apparatus which uses a three-dimensional DNA microarray and can easily examine genes in a short period of time in International Publication WO03/027673. In this case, a reaction solution is placed in a reaction vessel for a three-dimensional DNA microarray using a porous filter as a carrier, and is caused to repeatedly pass through a reaction portion by being pressurized and depressurized by a syringe pump. Therefore, gene examination can be performed with high repeatability within a short period of time. In addition, International Publication WO03/005013 has proposed a microarray having a structure which uses a porous substrate and causes a reaction solution to repeatedly pass through a reaction portion by a syringe or a piston.

### Disclosure of Invention

The apparatus disclosed in International Publication WO03/027673 or International Publication WO03/005013 is configured so that a reaction solution is dispensed from above a microarray substrate and a sample solution into a reaction vessel, a reaction state is observed from above, and pressurization and depressurization by a syringe pump are performed from below. Therefore, dispensation must be manually performed, and it requires much time to handle many specimens.

The present invention has been made in consideration of this situation, and its object is to provide a technique of biorelated substances which allows handling many specimens with ease and at high speed.

For that purpose, a secondary object of the present invention is to provide a new reaction vessel for providing such a technique of biorelated substances. Another secondary object of the present invention is to provide a reaction apparatus which uses such a reaction vessel. Still another secondary object of the present invention is to provide a new detection apparatus which uses such a reaction vessel.

According to an aspect, the present invention is directed to a reaction vessel for detecting biorelated substances. A reaction vessel of the present invention comprises a three-dimensional substrate on which a probe for detecting a biorelated substance is immobilized, a coupling portion allowed to be coupled to liquid driving means in an airtight fashion and to be coupled to detection means so as to prevent leakage of light, and a solution sucking portion allowed to suck a solution. The coupling portion and the solution sucking portion are arranged with a three-dimensional substrate held between them.

According to another aspect, the present invention is directed to a biorelated substance reaction apparatus using the above reaction vessel. A reaction apparatus of the present invention comprises a fitting portion allowed to be fitted on the coupling portion of the reaction vessel, pressure control means for transferring a pressure for sucking and discharging a sample solution to the reaction vessel through the fitting portion, and temperature regulating means for regulating a temperature of the sample solution in the reaction vessel.

According to still another aspect, the present invention is directed to a biorelated substance detection apparatus using the above reaction vessel. A detection apparatus of the present invention comprises a fitting portion allowed to be fitted on a coupling portion of a reaction vessel and detection means for detecting a reaction of a biorelated substance on the three-dimensional substrate in the reaction vessel.

### Brief Description of Drawings

FIG. 1 schematically shows a reaction vessel and an examination apparatus according to the first embodiment of the present invention;
FIG. 2 is a sectional view of an examination apparatus and a reaction vessel according to the second embodiment of the present invention;
FIG. 3 schematically shows the arrangement of an observation optical system and a reaction vessel according to the second embodiment of the present invention;
FIG. 4 is a perspective view schematically showing the arrangement of an examination apparatus according to the fourth embodiment of the present invention;
FIG. 5 shows a temperature regulating unit shown in FIG. 4 and a temperature regulator connected to it;
FIG. 6 schematically shows a reaction vessel and an examination apparatus according to the fifth embodiment of the present invention;
FIG. 7 is a sectional view of an examination apparatus and a reaction vessel according to the sixth embodiment of the present invention;
FIG. 8 shows a change in pressure in the examination apparatus shown in FIG. 7;
FIG. 9 is a sectional view of a reaction vessel according to the seventh embodiment of the present invention;
FIG. 10 schematically shows the arrangement of an examination apparatus according to the eighth embodiment of the present invention;
FIG. 11 is a perspective view of an examination apparatus according to the 10th embodiment of the present invention;
FIG. 12 shows a reaction vessel transfer guide shown in FIG. 11 with a reaction vessel being housed in the reaction vessel transfer guide;
FIG. 13 shows the reaction vessel transfer guide shown in FIG. 11 with the reaction vessel being lowered to be projected from the reaction vessel transfer guide;
FIG. 14 schematically shows the arrangement of an examination apparatus according to the 11th embodiment of the present invention;
FIG. 15 is a plan view of the fitting portion shown in FIG. 14 as viewed from below;
FIG. 16 schematically shows the arrangement of an examination apparatus according to the 12th embodiment of the present invention;
FIG. 17 schematically shows the arrangement of an examination apparatus according to the 13th embodiment of the present invention;
FIG. 18 schematically shows the arrangement of an examination apparatus according to the 14th embodiment of the present invention;
FIG. 19 is a plan view schematically showing the arrangement of an examination apparatus according to the 15th embodiment of the present invention;
FIG. 20 schematically shows a cross-section of the turntable shown in FIG. 19;
FIG. 21 schematically shows the sampling device shown in FIG. 19;
FIG. 22 schematically shows a cross-section of a peripheral portion of the reaction vessel supply device shown in FIG. 19;
FIG. 23 shows the first step in a reaction vessel manufacturing method according to the 16th embodiment of the present invention;
FIG. 24 shows the step following the step shown in FIG. 23;
FIG. 25 shows the step following the step shown in FIG. 24;
FIG. 26 shows the step following the step shown in FIG. 25;
FIG. 27 shows the step following the step shown in FIG. 26;
FIG. 28 shows the step following the step shown in FIG. 27;
FIG. 29 shows the first step in a reaction vessel manufacturing method according to the 17th embodiment of the present invention;
FIG. 30 shows the step following the step shown in FIG. 29;
FIG. 31 shows the step following the step shown in FIG. 30;
FIG. 32 shows the first step in a reaction vessel manufacturing method according to the 18th embodiment of the present invention;
FIG. 33 shows the step following the step shown in FIG. 32;
FIG. 34 shows the step following the step shown in FIG. 33;
FIG. 35 shows the first step in a reaction vessel manufacturing method according to the 18th embodiment of the present invention;
FIG. 36 shows a sectional structure of a three-dimensional substrate formed by the step shown in FIG. 35;
FIG. 37 shows the step following the step shown in FIG. 35;
FIG. 38 shows the step following the step shown in FIG. 37;
FIG. 39 shows the step following the step shown in FIG. 38; and
FIG. 40 shows the step following the step shown in FIG. 39.

### Best Mode for Carrying Out the Invention

The embodiments of the present invention will be described below with reference to the views of the accompanying drawing.

### First Embodiment

The present embodiment is directed to a new reaction vessel for the detection of biorelated substances and a biorelated substance examination apparatus (including a reaction apparatus and a detection apparatus) using the reaction vessel.

In this specification, "biorelated substances" include not only cells of animals, plants, microorganisms, and the like but also substances originating from viruses which cannot proliferate by themselves unless parasitizing such cells. Biorelated substances include substances in natural forms which are directly extracted/isolated from these cells, substances produced by using a gene engineering technique, and chemically modified substances. More specifically, biorelated substances include hormones, enzymes, antibodies, antigens, abzymes, other proteins, nucleic acids, and the like.

In addition, a "probe" means a substance which specifically binds with the above biorelated substance, and includes any one of substances in the following relationships: a ligand such as a hormone and its acceptor, an enzyme and its substrate, an antigen and its antibody, a nucleic acid having a specific sequence and a nucleic acid having a sequence complementary thereto, and the like.

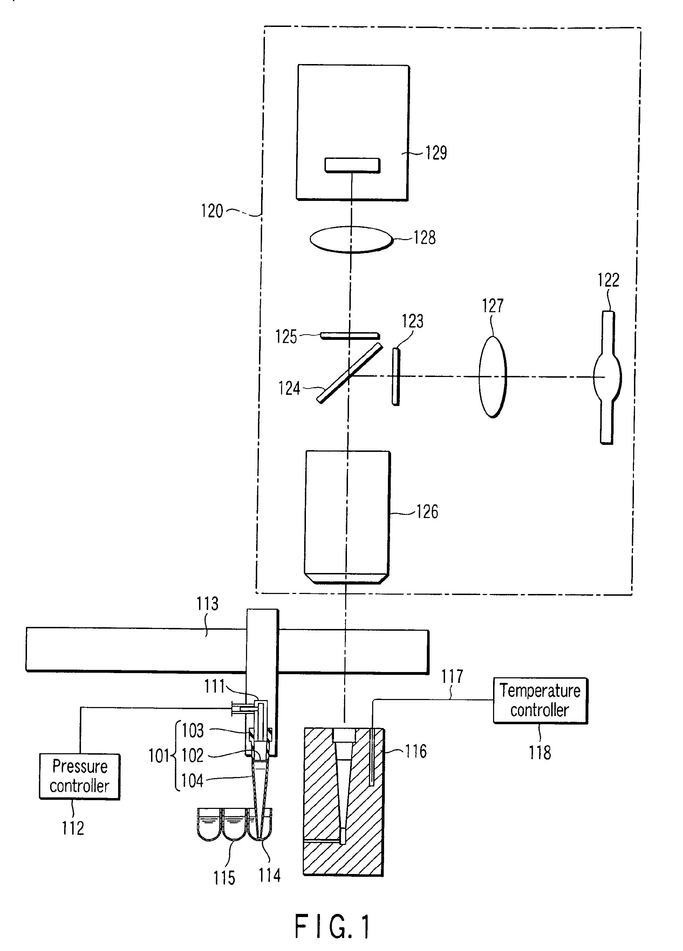

FIG. 1 schematically shows a reaction vessel and an examination apparatus according to the first embodiment of the present invention.

As shown in FIG. 1, a reaction vessel 101 includes a three-dimensional substrate 102 on which probes for the detection of biorelated substances are immobilized, a coupling portion 103 which is to be coupled to the examination apparatus, and a solution sucking portion 104 which is allowed to suck a solution.

In this specification, a "three-dimensional substrate" is a substrate on which probes are immobilized. As this substrate, a substrate made of any material and having any structure can be used as long as it has a structure which has a spread in the three-dimensional direction and allows a liquid to pass therethrough. For example, various kinds of filters and porous members can be used. As this substrate, a porous member obtained by etching an Si wafer, hollow fiber, metal oxide film, beads, or capillary is especially preferable.

The three-dimensional substrate 102 includes a reaction region in which a plurality of probe molecules which complement a target substance are immobilized in the form of a circle having a diameter of 120 µm. The coupling portion 103 and the solution sucking portion 104 are coupled to each other with the three-dimensional substrate 102 held between them. The coupling portion 103 and the solution sucking portion 104 comprise a non-optical-transparent material.

The examination apparatus includes a fitting portion 111 which is allowed to be fitted on the coupling portion 103 of the reaction vessel 101, a pressure controller 112 which controls the pressure of the reaction vessel 101 through the fitting portion 111, and a biaxial robot 113 which movably supports the fitting portion 111. The pressure controller 112 preferably includes a means for generating a pressure and a means for detecting a pressure.

The examination apparatus also includes a sample vessel 114 which stores a sample solution and a cleaning fluid vessel 115 which stores a cleaning fluid. The sample vessel 114 comprises, for example, a micro-titer plate. The cleaning fluid vessel 115 comprises, for example, a micro-titer plate or a bottle.

The coupling portion 103 of the reaction vessel 101 has an opening end. Fitting the fitting portion 111 in the opening end of the coupling portion 103 allows the reaction vessel 101 to be detachably mounted on the fitting portion 111. The reaction vessel 101 mounted on the fitting portion 111 is coupled to the pressure controller 112 in an airtight fashion. The biaxial robot 113 can move the reaction vessel 101 mounted on the fitting portion 111.

The pressure controller 112 transfers a pressure to the reaction vessel 101 mounted on the fitting portion 111, causing a sample solution or cleaning fluid to be sucked from the sample vessel 114 or cleaning fluid vessel 115 into the reaction vessel 101 or a sample solution or cleaning fluid to be discharged from the reaction vessel 101 through the solution sucking portion 104.

The examination apparatus further includes a heater 116 for controlling a sample temperature during a hybridization reaction or a cleaning fluid temperature at the time of cleaning operation, a temperature measuring resistor 117 for measuring the temperature of the heater 116, a temperature controller 118 which controls the temperature of the heater 116 on the basis of the information obtained by the temperature measuring resistor 117.

The heater 116 has a space for housing the reaction vessel 101. The reaction vessel 101 mounted on the fitting portion 111 is moved into the space of the heater 116 by the biaxial robot 113, as needed.

The heater 116, temperature measuring resistor 117, and temperature controller 118 constitute a temperature regulating means for regulating the temperature of a solution in the reaction vessel 101. This temperature regulating means cooperates with the fitting portion 111 and pressure controller 112 to constitute a reaction apparatus which promotes a hybridization reaction.

The examination apparatus also includes an observation optical system 120 for optically observing the three-dimensional substrate 102 in the reaction vessel 101. The observation optical system 120 is, for example, a fluorescence observation optical system.
The observation optical system 120 includes a light source 122 which emits light with a visible wavelength, an excitation filter 123 which selectively transmits a wavelength for exciting a fluorescent material bound to a sample molecule from the light emitted by the light source 122, a dichroic mirror 124 which selectively reflects light transmitted through the excitation filter 123 and transmits fluorescence emitted from the fluorescent material, and a fluorescence filter 125 which selectively transmits fluorescence emitted from the fluorescent material and transmitted through the dichroic mirror 124.

The observation optical system 120 also includes an objective lens 126 for optically detecting the trapping of sample molecules in probe molecules on the three-dimensional substrate 102, an illumination optical system 127 which brings light from the light source 122 to the three-dimensional substrate 102 through the excitation filter 123 and the dichroic mirror 124, an imaging optical system 128 for imaging the light from the three-dimensional substrate 102 captured by the objective lens 126, and a CCD camera 129 which converts the optical image imaged by the imaging optical system 128 into an electrical signal.

The coupling portion 103 has a tapered inner surface which gradually increases in diameter with an increase in distance from the three-dimensional substrate 102. The coupling portion 103 has an opening end in which the fitting portion 111 is to be inserted. The taper angle between this opening end and the three-dimensional substrate 102 is larger than the NA of the objective lens 126. Accordingly, light from the reaction region on the three-dimensional substrate 102 is focused without vignetting.

The operation of the examination apparatus of this embodiment will be described below in accordance with a general examination process.
(1) Preparation
   A nucleic acid is extracted from a biological sample, labeled with a fluorescent material such as FITC, and then dissolved in a buffer solution.
   The dissolved sample solution is dispensed into the sample vessel 114, which is then placed at a sample vessel set position.
   In addition, a cleaning fluid is dispensed into the cleaning fluid vessel 115, which is then placed at a cleaning fluid vessel set position.
   The reaction vessel 101 is set at a predetermined position.
(2) Suction of Sample Solution
   The reaction vessel 101 is mounted on the fitting portion 111.
   The interior of the reaction vessel 101 is depressurized by the pressure controller 112 through the fitting portion 111, causing a sample solution is sucked from the sample vessel 114. A portion of the solution sucking portion 104 of the reaction vessel which is positioned below the solid support is preferably tapered as shown in the figure, when a sample solution, in particular, is sucked from a micro-titer plate or the like, because of decreasing the remaining amount of solution. After the suction of a sample solution, an air layer is preferably sucked, which prevents the sample solution from dripping from the reaction vessel when it moves to the temperature controller, and also the sample solution from dripping from the reaction vessel when the sample solution is moved up and down through the three-dimensional substrate.
(3) Transportation of Reaction Vessel to Temperature Controller (Heater)
   The reaction vessel 101 is attached in the recess portion of the heater 116 in tight contact.
(4) Hybridization
   The heater 116 is controlled to a desired temperature.
   The interior of the reaction vessel 101 is repeatedly pressurized and depressurized by the pressure controller 112, which moves the sample solution up and down through the three-dimensional substrate 102 to hybridize the nucleic acid contained in the probes and sample solution.
(5) Cleaning
   After the end of a hybridization reaction, the interior of the reaction vessel 101 is pressurized by the pressure controller 112 through the fitting portion 111, discharging the sample solution into the sample vessel 114.
   the interior of the reaction vessel 101 is depressurized by the pressure controller 112 through the fitting portion 111, causing a cleaning fluid is sucked from the cleaning fluid vessel 115.
   The interior of the reaction vessel 101 is repeatedly pressurized and depressurized by the pressure controller 112, which cleans the three-dimensional substrate 102 with the cleaning fluid, washing off the nucleic acid contained in the sample solution which is not bound to any probe molecule.
(6) Decoupling
   The reaction vessel 101 is removed from the fitting portion 111 to expose the three-dimensional substrate 102.
(7) Reading of Reaction Result
   The observation optical system 120 is placed above the reaction vessel 101. Exciting light is applied to the three-dimensional substrate 102, light from probe spots on the three-dimensional substrate 102 is imaged by the CCD camera 129 as electronic image data, and the data of the image or the quantity of light from the probe spots is stored.
(8) Examination Result
   This stored data is analyzed to examine the expression state, mutation, polymorphism, and the like of the nucleic acid contained in the sample solution.
   According to this embodiment, by the single pressure controller 112, solutions necessary for the examination of a biorelated substance such as a sample solution and a cleaning fluid can be sucked from the respective vessels, and the sample solution can be moved to efficiently come into contact with a porous member. That is, the dispensing mechanism for a sample solution and cleaning fluid and the driving mechanism for the sample solution are integrated. This simplifies the apparatus arrangement.
   The present embodiment is preferably configured so that a solution necessary for the examination of a biorelated substance such as a sample solution or a cleaning fluid is placed in micro-titer plates. That is, the sample vessel 114 and the cleaning fluid vessel 115 are preferably constituted from micro-titer plates. In this case, many samples can be examined at high speed.
   The reaction vessel 101 does not substantially transmit light, which preferably eliminates the need for preparing any specific light-shielding means in the case of performing examination with light such as fluorescence or chemiluminescence. When a target substance to be detected is to be labeled with fluorescence and detected, since light shielding must be provided even during a reaction with a probe, the reaction vessel 101 preferably has a light-shielding function. Although no specific limitations are imposed on materials for the reaction vessel 101 as long as they can substantially block light, a crystalline resin is preferably used in consideration of chemical resistance and heat resistance against a solution to be handled. Crystalline resins include, for example, polyproprene, polyacetal, polyamide-based synthetic resins, polymethylpentene, polyethyleneterephthalate, and polyethylene. These materials are inexpensive, can be easily made to contain carbon particles, and is easily moldable. Polyproprene and polyacetal containing carbon particles can easily provide a light shielding function, and hence is more preferable. Furthermore, polyacetal is high in transferability from a mold for molding, and allows easy manufacture of a reaction vessel with high dimensional accuracy.
   In addition, the inner surface of the coupling portion 103 of the reaction vessel 101 is tapered, and the taper angle between the opening end of the coupling portion 103 and the three-dimensional substrate 102 is preferably larger than the NA of the objective lens 126 because all signals from spots formed on the three-dimensional substrate 102 as a support for probes can be received. In order to efficiently receive all signals from spots without excessively increasing the size of an optical system, it is especially preferable that the NA of the observation optical system 120 be substantially equal to the taper angle of the inner surface of the coupling portion 103 of the reaction vessel 101.
   Reaction vessels 101 having such tapered portions can be mass-produced by molding with a resin, and a vessel having sufficient strength can be manufactured even if the thickness of the resin is about 0.1 to 0.2 mm or less. Therefore, the manufactured vessel has a small thermal capacity and high temperature responsibility, and hence a biorelated substance can be examined with high accuracy.
   A portion of the reaction vessel 101 on which the three-dimensional substrate 102 is placed preferably has a diameter of 1 to 6 mm. In clinical examination, it can be thought from the number of examination items that the number of spots is about 10 to 250. If, for example, single nucleotide polymorphisms in about 30 regions are to be examined, eight types of probes may be required for a single nucleotide polymorphism in one region. Therefore, 240 types of probes are required. When such a probe is to be immobilized on a three-dimensional substrate, therefore, a portion of the examination vessel in which the three-dimensional substrate is placed preferably has a diameter of 1 to 6 mm because about 10 to 250 spots can be efficiently arranged.
   In addition, a biorelated substance as a target substance to be examined is sampled and extracted from blood or tissue. Therefore, the amount of solution from which sampling can be performed is limited. It is desirable that examination can be performed with a minimum amount of solution. If, however, the volume of sample solution is small, since the solution often is set at a predetermined temperature of about 30°C to 60°C suitable for a reaction at a reaction stage, the evaporation of the sample solution may influence an examination result. In addition, in order to perform reaction and detection of a biorelated substance with high repeatability, a certain volume of solution is required in consideration of the movement of the solution, the retention of its temperature, and the evaporation of the solution. The volume of 10 to 100 µL allows performing reaction and detection of a biorelated substance with high repeatability. Accordingly, the volume of solution finally regulated is preferably 10 to 100 µL. The substantial volume of the reaction vessel 101 is preferably 10 to 100 µL in order to store this sample solution, provide sufficient contact between the three-dimensional substrate 102 and the sample solution, and realize an efficient reaction with a probe.
   A sample solution stored in a micro-titer plate enables reaction and detection to be performed within a very short period of time. Examination can be performed with a high throughput.

### Second Embodiment

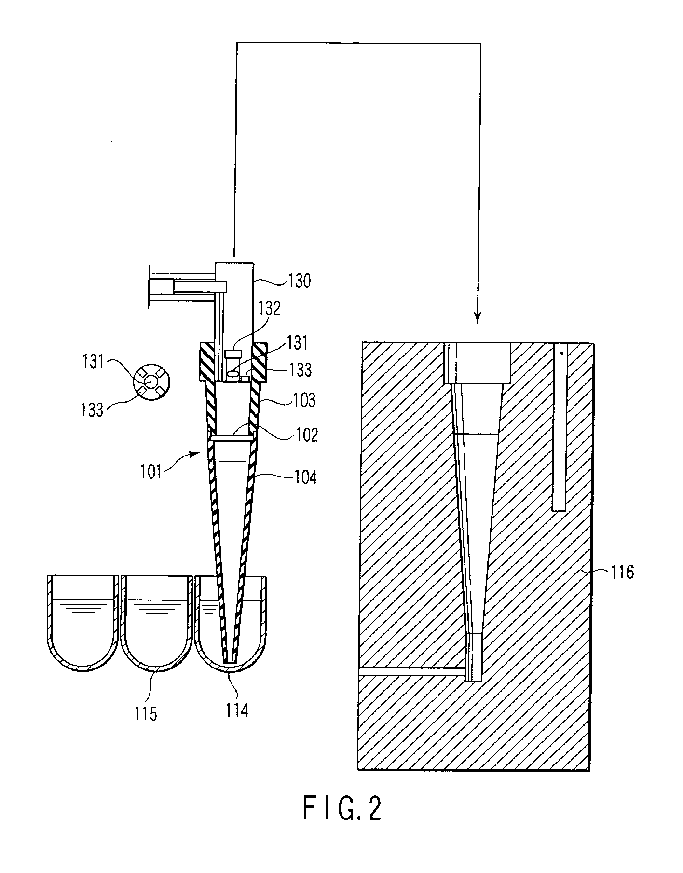

The present embodiment is directed to another examination apparatus using the reaction vessel according to the first embodiment. FIG. 2 is a sectional view of an examination apparatus and a reaction vessel according to the second embodiment of the present invention. The same reference numerals as in FIG. 1 denote the same members in FIG. 2, and a detailed description thereof will be omitted.

A fitting portion 130 in this embodiment includes an observation optical system for optically observing a three-dimensional substrate 102. That is, the fitting portion 130 comprises an imaging optical system 131 for forming an optical image of the three-dimensional substrate 102, a CCD 132 which converts an optical image of the three-dimensional substrate 102 formed by the imaging optical system 131 into an electrical signal, and an LED 133 which emits light having a wavelength which can excite fluorescent molecules bound to sample molecules.

Although not shown in particular, the fitting portion 130 is coupled to a pressure controller 112 (see FIG. 1) like the fitting portion 111 in the first embodiment. The interior of a reaction vessel 101 reaction vessel 101 can therefore be pressurized and depressurized by the pressure controller 112.

In the examination apparatus of this embodiment, since an observation optical system is provided in the fitting portion 130, the three-dimensional substrate 102 in the reaction vessel 101 can be optically observed without detaching the reaction vessel 101 from the fitting portion 130.

In addition, since the fitting portion 130 can transfer a pressure from the pressure controller 112 to the reaction vessel 101 like the fitting portion 111 in the first embodiment, a change in reaction state can be observed while a sampling solution is driven. In order to perform measurement for each probe under an optimal condition, measurement is performed first under a given condition, and then measurement is performed under another condition. The present embodiment is especially suitable for a case wherein measurement is performed while a temperature is changed or a reaction condition is changed, e.g., a case wherein measurement is performed with a given probe at 40°C, and measurement is performed with another probe at 60°C.
In addition, a proper reaction time can also be obtained by measuring a change over time.

### Third Embodiment

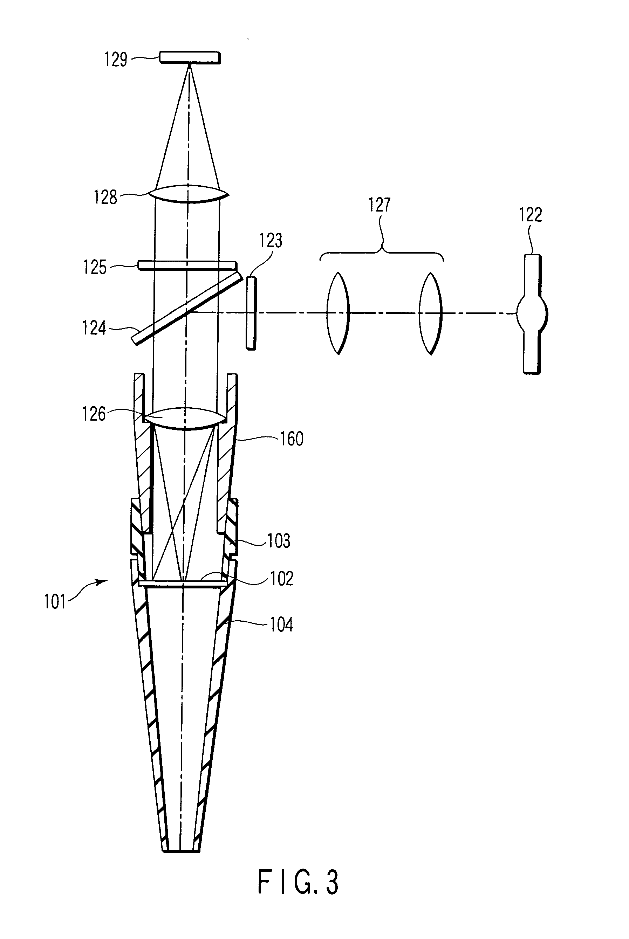

The present embodiment is directed to another observation optical system which can be used in place of the observation optical system according to the first embodiment. FIG. 3 schematically shows the arrangement of an observation optical system and a reaction vessel according to the second embodiment of the present invention. The same reference numerals as in FIG. 1 denote the same members in FIG. 2, and a detailed description thereof will be omitted.

An observation optical system 120A of this embodiment includes optical elements functionally equivalent to those of the observation optical system 120 of the first embodiment. The observation optical system 120A also includes a sleeve 160 which is allowed to be fitted in a coupling portion 103 of a reaction vessel 101. The sleeve 160 is made of a non-optical-transparent material. An objective lens 126 is housed and held in the sleeve 160.

For this reason, each optical element of the observation optical system 120A is functionally equivalent to that of the observation optical system 120 of the first embodiment, but is much smaller than that of the observation optical system 120 of the first embodiment.

In this embodiment, a three-dimensional substrate 102 in the reaction vessel 101 is observed while the sleeve 160 housing the objective lens 126 is fitted in the coupling portion 103 of the reaction vessel 101.

In this embodiment, since the sleeve 160 housing the objective lens 126 is fitted in the coupling portion 103 of the reaction vessel 101, the space between the three-dimensional substrate 102 and the objective lens 126 is properly shielded from light. Accordingly, disturbance light from entering the observation optical system 120A is properly prevented. Therefore, the measurement accuracy improves.

### Fourth Embodiment

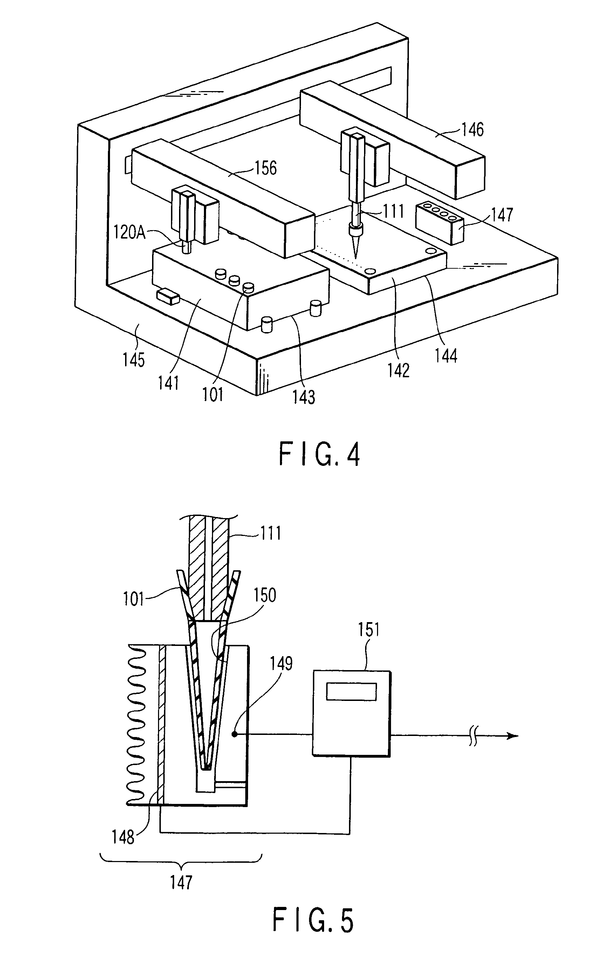

The present embodiment is directed to another examination apparatus using the reaction vessel according to the first embodiment. FIG. 4 is a perspective view schematically showing the arrangement of an examination apparatus according to the fourth embodiment of the present invention. FIG. 5 shows the temperature regulating unit shown in FIG. 4 and a temperature regulator connected to it. The same reference numerals as in FIG. 1 denote the same members in FIGS. 4 and 5, and a detailed description thereof will be omitted.

As shown in FIG. 4, the examination apparatus of this embodiment includes a rack 141 for housing a reaction vessel 101, a microplate 142 for storing a sample solution or a cleaning fluid, a base 145 having a rack housing portion 143 in which the rack 141 can be positioned and mounted and a microplate housing portion 144 in which the microplate 142 is mounted, a fitting portion 111 similar to that in the first embodiment which is allowed to be fitted in the reaction vessel 101, an XYZ robot 146 which movably supports the fitting portion 111, and a temperature regulating unit 147 for regulating the temperature of the solution in the reaction vessel 101.

It suffices if the rack 141 can at least house the reaction vessel 101. More preferably, the rack 141 can house a plurality of reaction vessels 101.

Although not shown in particular, the fitting portion 111 is coupled to a pressure controller 112 (see FIG. 1) like the fitting portion 111 in the first embodiment. Referring to FIG. 4, the examination apparatus is illustrated to have only one fitting portion 111. More preferably, however, the examination apparatus may have a plurality of fitting portions 111 to allow simultaneous operation of a plurality of reaction vessels 101.

As shown in FIG. 5, the temperature regulating unit 147 has a recess portion 150 which can house the reaction vessel 101 in substantial contact. The recess portion 150 is connected to an external portion through a hole in the lower end portion so as not to interfere with the movement of a solution in the reaction vessel 101. The temperature regulating unit 147 includes a Peltier device 148 for temperature regulating and a thermocouple 149 for temperature detection. Both the Peltier device 148 and the thermocouple 149 are electrically connected to a temperature regulator 151 which controls the temperature of the temperature regulating unit 147. The temperature regulator 151 controls the driving of the Peltier device 148 on the basis of the information obtained by the thermocouple 149.

As shown in FIG. 4, the examination apparatus of this embodiment includes an observation optical system 120A similar to that in the third embodiment and an XYZ robot 156 which movably supports the observation optical system 120A. Referring to FIG. 4, the examination apparatus is illustrated to have only one observation optical system 120A. However, the examination apparatus may have a plurality of observation optical systems 120A so as to allow simultaneous observation of a plurality of reaction vessels 101.

The operation of the examination apparatus according to this embodiment will be described below in accordance with a normal examination process:
(1) The reaction vessel 101 as an examination target is placed on the rack 141.
(2) A prepared sample solution and cleaning fluid are dispensed into the microplate 142.
(3) The rack 141 on which the reaction vessel 101 is mounted is placed in the rack housing portion 143.
(4) The microplate 142 in which the solutions are dispensed is placed in the microplate housing portion 144.
(5) The XYZ robot 146 is caused to fit the fitting portion 111 in the target reaction vessel 101 placed on the rack 141.
(6) The fitting portion 111 on which the reaction vessel 101 is mounted is moved by the XYZ robot 146 to position the reaction vessel 101 at a position where a solution can be sucked from a predetermined well of the microplate 142.
(7) The interior of the reaction vessel 101 is depressurized by the pressure controller 112 (see FIG. 1), sucking the sample solution from the well of the microplate 142.
(8) The fitting portion 111 on which the reaction vessel 101 is mounted is moved by the XYZ robot 146, placing the reaction vessel 101 in the recess portion 150 of the temperature regulating unit 147. The temperature regulator 151 regulates the temperature of the temperature regulating unit 147 to a temperature suitable for a hybridization reaction.
(9) The interior of the reaction vessel 101 is repeatedly pressurized and depressurized by the pressure controller 112, which moves the solution up and down through the three-dimensional substrate 102, causing a hybridization reaction between the sample and the probes in the reaction region.
(10) After the end of the reaction, the fitting portion 111 on which the reaction vessel 101 is mounted is moved by the XYZ robot 146 to position the reaction vessel 101 to the original well of the microplate 142. The interior of the reaction vessel 101 is then pressurized by the pressure controller 112, discharging the sample solution into the original well.
(11) The reaction vessel 101 is positioned to the well in which the cleaning fluid is dispensed by the XYZ robot 146.
(12) The interior of the reaction vessel 101 is depressurized, sucking the cleaning fluid into the reaction vessel 101.
(13) The interior of the reaction vessel 101 is repeatedly pressurized and depressurized, driving the cleaning fluid by a proper number of times.
(14) The interior of the reaction vessel 101 is pressurized, discharging the cleaning fluid into the original well.
(15) The reaction vessel 101 in which a reaction has been terminated is returned to the rack 141 by the XYZ robot 146.
(16) The operation from (5) to (15) is repeatedly executed for all the reaction vessels 101 as examination targets housed in the rack 141.
(17) The observation optical system 120A is moved by the XYZ robot 156 to be fitted in the processed reaction vessel 101 from above, detecting the fluorescence intensity in the reaction region on a three-dimensional substrate 102.
(18) The operation in (17) is repeatedly executed with respect to all the processed reaction vessels 101 as examination targets. The operation in (17) is preferably performed every time the operation from (5) to (15) is terminated with respect to one reaction vessel 101.

According to this embodiment, since a hybridization reaction and detection can be separately performed and sequentially processed, experiment and detection concerning a large amount of sample can be performed at high speed.

### Fifth Embodiment

The present embodiment is directed to a new reaction vessel for detecting biorelated substances and a biorelated substance examination apparatus using the reaction vessel.

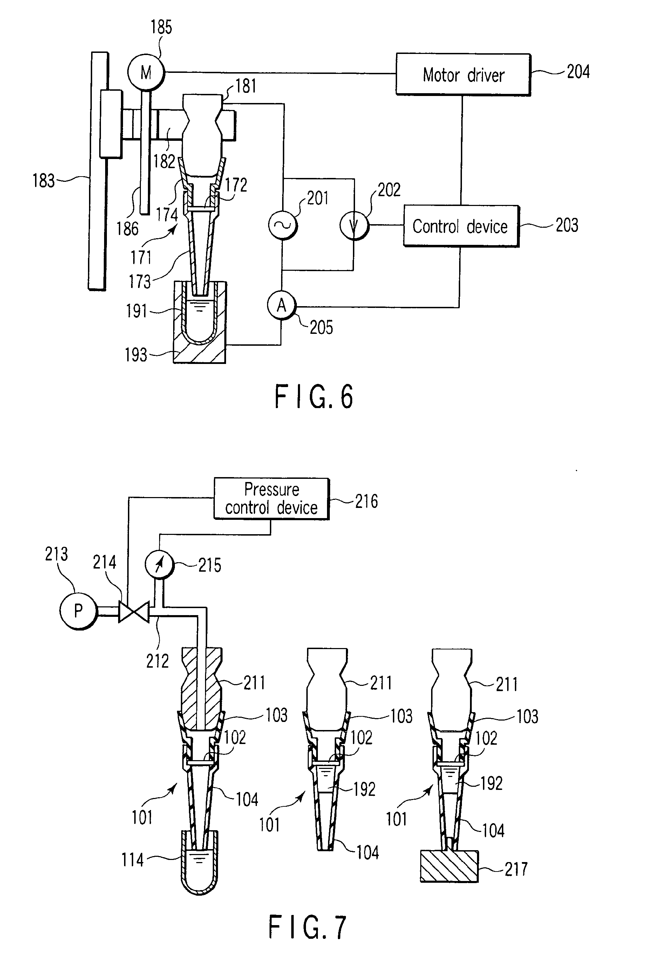

FIG. 6 schematically shows a reaction vessel and examination apparatus according to the fifth embodiment of the present invention.

As shown in FIG. 6, a reaction vessel 171 includes a three-dimensional substrate 172 on which probes for detecting biorelated substances are immobilized, a coupling portion 173 which is to be coupled to the examination apparatus, and a solution sucking portion 174 which is allowed to suck a solution. The three-dimensional substrate 172 is a member identical to the three-dimensional substrate 102 in the first embodiment. Both the coupling portion 173 and the solution sucking portion 174 are made of a resin material containing carbon particles, e.g., carbon-containing polypropylene. The housing (i.e., the coupling portion 173 and the solution sucking portion 174) of the reaction vessel 171 has electrical conductivity.

The examination apparatus includes a fitting portion 181 on which the reaction vessel 171 is to be mounted and an XYZ robot for moving the fitting portion 181. The fitting portion 181 is conductive and has a voltage measurement electrode. The XYZ robot includes an arm 182 which supports the fitting portion 181, a direct-acting guide 183 which supports the arm 182 so as to allow it to move in the Z direction, a ball screw 186 engaged with the arm 182, and a control motor 185 which drives the ball screw 186. The ball screw 186 converts the rotational motion of the control motor 185 into rectilinear motion in the Z direction of the arm 182.

The examination apparatus further includes a vessel 191 which stores a solution necessary for examination such as a sample solution or a cleaning fluid and a rack 193 which houses the vessel 191. Both the vessel 191 and the rack 193 are conductive, and the rack 193 has a voltage measurement electrode.

The examination apparatus further includes an AC power supply 201 for applying an AC voltage between the fitting portion 181 and the rack 193, a voltmeter 201 for measuring the voltage between the two terminals of the AC power supply 201, an ammeter 205 for measuring a current flowing between the fitting portion 181 and the rack 193, a motor driver 204 which drives the control motor 185, and a control device 203 for controlling the motor driver 204. The control device 203 obtains an impedance from the voltage value measured by the voltmeter 201 and the current value measured by the ammeter 205, and performs feedback control on the motor driver 204 on the basis of the impedance.

The operation of the examination apparatus according to this embodiment will be described below. Assume that in the following description, a sample solution is stored in the vessel 191.

The reaction vessel 171 is lowered toward the solution level of the sample solution stored in the vessel 191 while the impedance between the fitting portion 181 and the rack 193 is measured.

The impedance gradually decreases as the reaction vessel 171 approaches the solution level of the sample solution. When the impedance decreases below a threshold, the lowering speed of the reaction vessel 171 is decreased.

When the reaction vessel 171 keeps moving down and comes into contact with the sample solution, the impedance abruptly changes. This position is therefore set as a solution level position. The reaction vessel 171 is further lowered from this solution level position by a distance by which a predetermined amount of sample solution can be sucked, and is stopped there. After the reaction vessel 171 reaches this position, sucking of a sample solution is started by a pressure controller (not shown). Monitoring an impedance informs that the suction of a solution is reliably performed. When the impedance abruptly changes, a suction failure has occurred. In such case, therefore, the reaction vessel is lowered to continue suction.

According to another method, when the reaction vessel 171 comes into contact with a sample solution, the impedance abruptly changes, and hence this position is set as a solution level position. The reaction vessel 171 is further lowered from this solution level by a predetermined distance, and is stopped there. After the vessel reaches this position, suction of a sample solution is started by the pressure controller (not shown). Furthermore, while the sample solution is sucked, the reaction vessel 171 is lowered in accordance with the solution level movement amount which can be calculated from the sucked volume and the volume of the reaction vessel. At this time, an impedance is measured to check whether the reaction vessel is in contact with the solution level.

In this embodiment, detecting a solution level makes it possible to properly control the velocity at which the reaction vessel 171 enters the liquid level. This can prevent a solution as a suction target from scattering. In addition, since suction can be performed while a solution level is checked, the solution can be reliably sucked.

Since the coupling portion 173 and the solution sucking portion 174 contain black carbon, light can be blocked.

### Sixth Embodiment

The present embodiment is directed to another examination apparatus using the reaction vessel according to the first embodiment. FIG. 7 is a sectional view of an examination apparatus and a reaction vessel according to the sixth embodiment of the present invention. The same reference numerals as in FIG. 1 denote the same members in FIG. 7, and a detailed description thereof will be omitted.

As shown on the left side of FIG. 7, the examination apparatus includes a fitting portion 211 on which a reaction vessel 101 is to be mounted, a pressure controller 213 which generates a negative pressure, a conduit 212 which allows fluid communication between the fitting portion 211 and the pressure controller 213, a pressure control valve 214 provided for the conduit 212, a pressure measuring means 215 which measures the pressure of the pressure of the conduit 212 between the pressure control valve 214 and the fitting portion 211, and a pressure control device 216 which controls the pressure control valve 214 on the basis of the information obtained by the pressure measuring means 215.

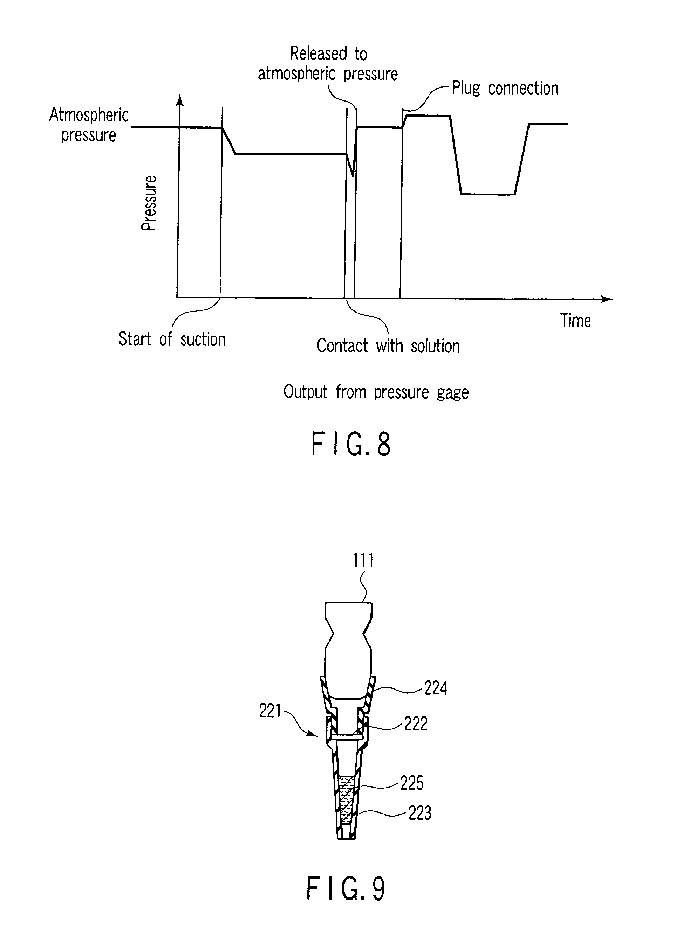

The pressure controller 213 applies a negative pressure to the conduit 212, and a change in the pressure of the conduit 212 is measured by a pressure gauge while a sample solution is sucked from a sample vessel 114. As shown on the middle of FIG. 7, when the sample solution comes into contact with a three-dimensional substrate 102, since the pressure starts to further decrease as shown in FIG. 8, suction is continued until the sample solution comes into contact with the three-dimensional substrate 102. When the sample solution comes into contact with the three-dimensional substrate 102, the conduit 212 is opened to be released to atmospheric pressure by the pressure control valve 214, and the suction port of the reaction vessel 101 is hermetically sealed with a plug 217 as shown on the right side of FIG. 7. Upon further application of a negative pressure, the sample solution passes through the three-dimensional substrate 102 and moves above the three-dimensional substrate 102. At this time, since the lower portion of the three-dimensional substrate 102 is set at a negative pressure, the sample solution moves below the three-dimensional substrate 102 when the conduit 212 is opened to be released to atmospheric pressure by the pressure control valve 214.

According to this embodiment, since a sample solution can be driven (sucked and moved) by the pressure controller 213 comprising only a negative pressure source, the apparatus arrangement can be simplified. In addition, since there is no pressure difference between the two sides of the three-dimensional substrate 102 in a steady state, the three-dimensional substrate 102 is hard to crack.

### Seventh Embodiment

The present embodiment is directed to another reaction vessel which can be used in place of the reaction vessel according to the first embodiment. FIG. 9 is a sectional view of a reaction vessel according to the seventh embodiment of the present invention.

As shown in FIG. 9, a reaction vessel 221 includes a three-dimensional substrate 222 on which probes for detecting biorelated substances are immobilized, a fitting portion 224 which is to be coupled to a fitting portion 111 of the examination apparatus, a solution sucking portion 223 which is allowed to suck a solution, and a filter 225 for removing dust, which is provided in the solution sucking portion 223.

The three-dimensional substrate 222 is equivalent to the three-dimensional substrate 102 in the first embodiment, and the fitting portion 224 and 223 are respectively equivalent to the coupling portion 103 and the solution sucking portion 104 in the first embodiment. A detailed description of them will be omitted. The filter 225 has a function of filtering a solution passing therethrough.

When a solution is sucked into the reaction vessel 221, the solution passes through the filter 225 to be filtered.

In this embodiment, since the reaction vessel 221 comprises the filter 225, there is no need to filter a solution to remove dust before it is used.

The filter 225 preferably has a hole having a diameter almost equal to that of the three-dimensional substrate 222, and is more preferably made of the same material as that of the three-dimensional substrate 222. In this case, adhesion of dust to the three-dimensional substrate 222 can be prevented more properly.

### Eighth Embodiment

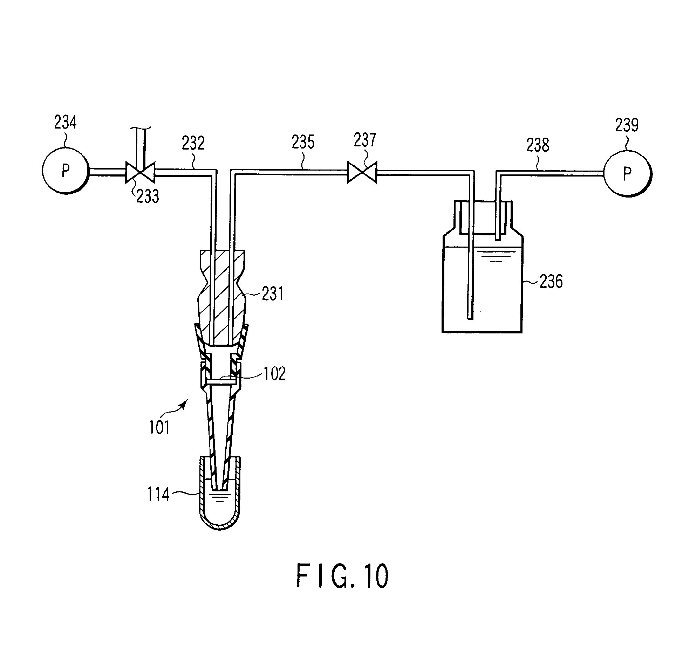

The present embodiment is directed to another examination apparatus using the reaction vessel according to the first embodiment. FIG. 10 schematically shows the arrangement of an examination apparatus according to the eighth embodiment of the present invention. Members denoted by the same reference numerals in FIG. 10 as those described above are substantially the same members denoted by them and described above, and a detailed description thereof will be omitted.

As shown in FIG. 10, the examination apparatus includes a fitting portion 231 on which a reaction vessel 101 is to be mounted, a pressure controller 234 for generating positive and negative pressures, a pressure transfer conduit 232 which allows fluid communication between the fitting portion 231 and the pressure controller 234, a valve 233 provided for the pressure transfer conduit 232, a cleaning fluid tank 236 for storing a cleaning fluid, a pump 239 for pressurizing the cleaning fluid tank 236, a tube 238 which allows fluid communication between the cleaning fluid tank 236 and the pump 239, a cleaning fluid supply conduit 235 which allows fluid communication between the fitting portion 231 and the cleaning fluid tank 236, and a valve 237 provided for the cleaning fluid supply conduit 235.

A sample vessel 114 storing a sample solution is set at a predetermined position. While the valve 237 is closed, a reaction vessel 101 is mounted on the fitting portion 231. The reaction vessel 101 is lowered toward the sample vessel 114 by a direct-acting mechanism (not shown), and the distal end of the reaction vessel 101 is stopped at a position where the solution stored in the sample vessel 114 can be sucked. A negative pressure is transferred from the pressure controller 234 to the solution through the pressure transfer conduit 232 to suck a predetermined amount of solution into the reaction vessel 101. The reaction vessel 101 is then pulled upward from the sample vessel 114 by the direct-acting mechanism (not shown) to separate the reaction vessel 101 from the solution level. The sample solution is moved up and down through a three-dimensional substrate 102 by a predetermined number of times by interacting positive and negative pressures using the pressure controller 234.

A positive pressure is applied to the sample solution by using the pressure controller 234 to move the sample solution below the three-dimensional substrate 102. After the valve 233 is opened to be released to atmospheric pressure, a cleaning fluid from the cleaning fluid tank 236 is supplied from above the three-dimensional substrate 102 by opening the valve 237 to pressurize the cleaning fluid tank 236 by using the pump 239. The valve 237 is closed, and a positive pressure is applied to the reaction vessel 101 by using the pressure controller 234, moving the sample solution below the three-dimensional substrate 102, together with the cleaning fluid. When cleaning is to be repeated, the discharge of the solution and the supply of the cleaning fluid are alternately executed.

As described in the first embodiment, in order to wash off the nucleic acid which has not been used for a hybridization reaction, a sample solution must be discharged from the reaction vessel. Assume however that the surface tension of each kind of solution (sample solution or cleaning fluid) with respect to a three-dimensional substrate is large. In this case, when the solution is to be discharged by applying a positive pressure from the fitting portion, the solution does not move due to the surface tension as an end face of the three-dimensional substrate coincides with the solution level of the solution. For this reason, if the surface tension is large, since the sample solution cannot be discharged from the reaction vessel by a pressure from above, the nucleic acid cannot be washed off. According to this embodiment, however, since a cleaning fluid is supplied from above, the sample solution can be washed off while being sequentially diluted with the cleaning fluid.

### Ninth Embodiment

The present embodiment is directed to driving of the reaction apparatus according to the first embodiment. The apparatus arrangement of this embodiment is therefore the same as that of the first embodiment.

In the first embodiment, the reaction apparatus and detection apparatus which constitute the examination apparatus are formed as discrete apparatuses. For this reason, after the end of a reaction, the reaction vessel 101 needs to be detached from the fitting portion 111 of the reaction apparatus.

In this embodiment, when a reaction vessel 101 is detached from a fitting portion 111 of the reaction apparatus, the pressure above a three-dimensional substrate 102 is made positive by a pressure controller 112. That is, the pressure is set to be equal to or more than the pressure given by P1 = (V0 + V1)/V1*P0 where V1 is a change in volume until the pressure is released to atmospheric pressure. Thereafter, the reaction vessel 101 is detached, and imaging is performed by the detection apparatus.

According to this embodiment, when the reaction vessel 101 is detached, a solution does not move above the three-dimensional substrate 102. For this reason, imaging is performed by the detection apparatus while the solution is held below the reaction vessel 101, and hence an imaging state is not disturbed by the solution level. As a consequence, a signal with less noise can be acquired.

### 10th Embodiment

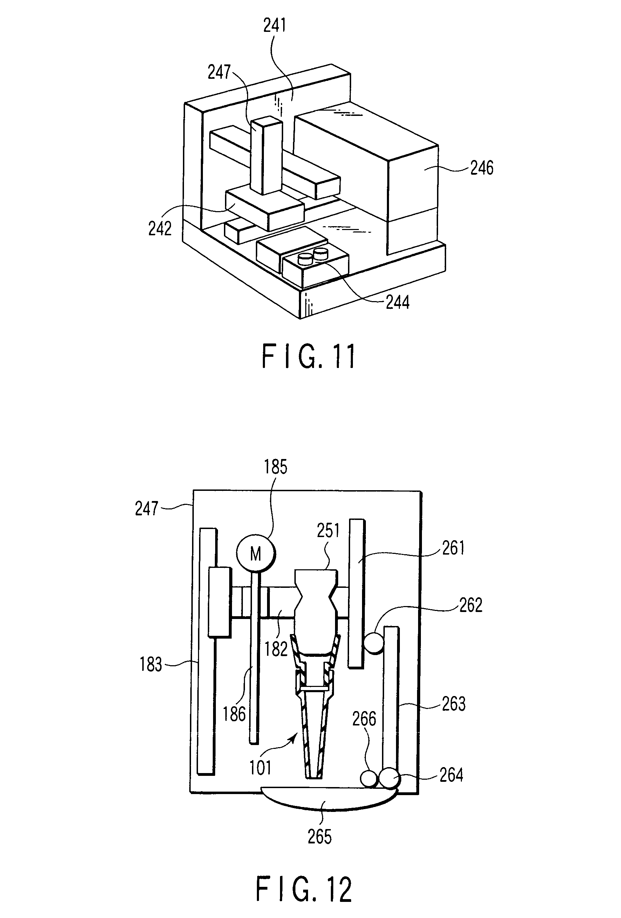

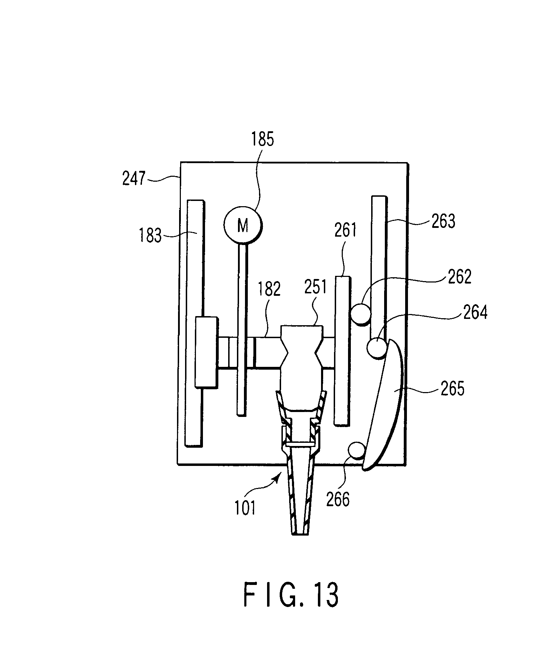

The present embodiment is directed to another examination apparatus using the reaction vessel according to the first embodiment. FIG. 11 is a perspective view of an examination apparatus according to the 10th embodiment of the present invention. FIGS. 12 and 13 show the reaction vessel transfer guide shown in FIG. 11. FIG. 12 shows a state wherein the reaction vessel is housed in the reaction vessel transfer guide. FIG. 13 shows a state wherein the reaction vessel is lowered and protrudes from the reaction vessel transfer guide. Members denoted by the same reference numerals in FIGS. 12 and 13 as those described above are substantially the same members denoted by them and described above, and a detailed description thereof will be omitted.

As shown in FIG. 11, the examination apparatus includes a reaction vessel rack 242 which can house a plurality of reaction vessels 101, a reaction vessel transfer guide 247 which can hold the reaction vessels 101, an XYZ robot 241 for moving the reaction vessel rack 242 and the reaction vessel transfer guide 247, a vessel rack 244 which houses a sample vessel 114 and a cleaning fluid vessel 115, and a detection apparatus 246 which detects a reaction of a three-dimensional substrate 102 in the reaction vessel 101.

As shown in FIGS. 12 and 13, the reaction vessel transfer guide 247 includes a fitting portion 251 on which the reaction vessel 101 is to be mounted, an arm 182 which supports the fitting portion 251, a direct-acting guide 183 which supports the arm 182 so as to allow it to move in the Z direction, a ball screw 186 engaged with the arm 182, and a control motor 185 for driving the ball screw 186.

The reaction vessel transfer guide 247 includes a rack 261 attached on the arm 182, a pinion 262 engaged with the rack 261, a rack 263 engaged with the pinion 262, a solution receiver 265 which is coupled to the lower end portion of the rack 263 through a hinge 264, and a pin 266 for guiding the solution receiver 265.

The reaction vessel 101 mounted on the fitting portion 251 is moved up and down by the control motor 185 as in the fifth embodiment. Upon the vertical movement of the fitting portion 251, the rack 261 attached on the arm 182 which supports the fitting portion 251 moves up and down. Upon the vertical movement of the rack 261, the rack 263 moves up and down in the reverse direction to the rack 261. In addition, upon the vertical movement of the rack 263, a portion of the solution receiver 265 which is coupled to the hinge 264 moves up and down while being guided by the pin 266.

As shown in FIG. 12, therefore, while the reaction vessel 101 is housed in the reaction vessel transfer guide 247, the solution receiver 265 is positioned below the reaction vessel 101. In this state, a solution which drips off from the reaction vessel 101 is stored in the solution receiver 265.

As the reaction vessel 101 is lowered, the rack 261 moves down, the rack 263 moves up, and the solution receiver 265 moves up while tilting. As shown in FIG. 13, while the reaction vessel 101 is lowered and protrudes from the reaction vessel transfer guide 247, the solution receiver 265 is completely retracted to a side of the reaction vessel 101.

The solution receiver 265 preferably has a shape that prevents a stored solution from dripping off in the state shown in FIG. 13. The solution receiver 265 preferably has an absorbing member which absorbs and holds a stored solution. In addition, the solution receiver 265 can be easily replaced.

According to this embodiment, since a solution which drips off from the reaction vessel 101 is stored in the solution receiver 265, the examination apparatus is not contaminated with the solution.

### 11th Embodiment

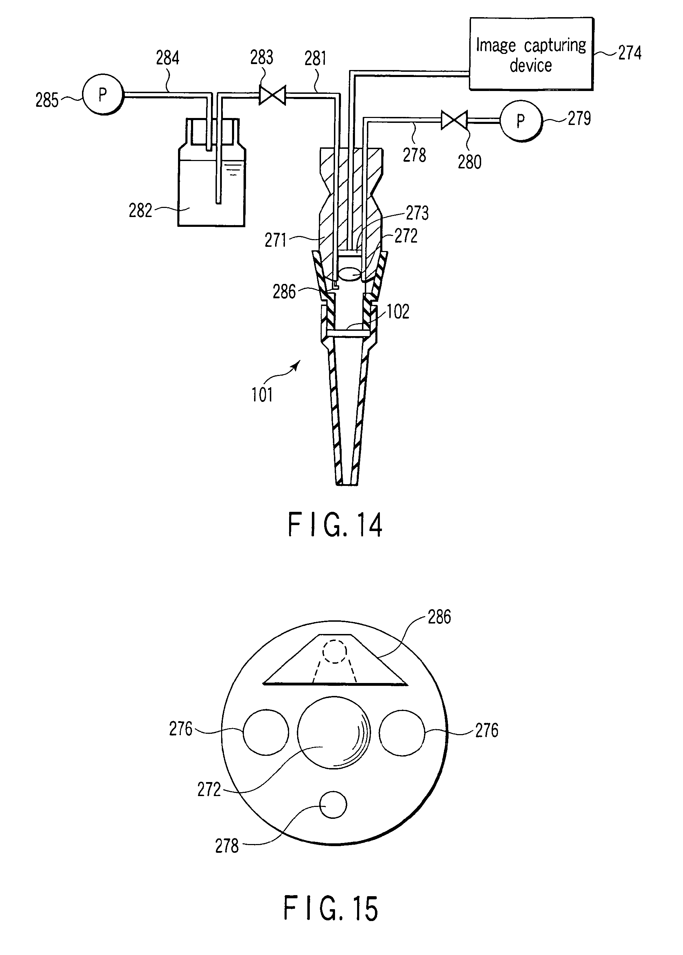

The present embodiment is directed to another examination apparatus using the reaction vessel according to the first embodiment. FIG. 14 schematically shows the arrangement of an examination apparatus according to the 11th embodiment of the present invention. FIG. 15 is a plan view of the fitting portion shown in FIG. 14 when viewed from below.

The present embodiment is basically similar to the second embodiment. A fitting portion 271 on which a reaction vessel 101 is to be mounted includes an observation optical system for optically observing a three-dimensional substrate 102. That is, as shown in FIGS. 14 and 15, the fitting portion 271 includes an imaging lens 272 for forming an optical image of the three-dimensional substrate 102 and a CCD 273 which converts the optical image of the three-dimensional substrate 102 formed by the imaging lens 272 into an electrical signal. As shown in FIG. 14, the examination apparatus further includes an image capturing device 274 which captures a signal from the CCD 273 and converts it into digital data. As shown in FIG. 15, the fitting portion 271 comprises an illumination optical system 276 which emits light that excites residual fluorescence molecules on the three-dimensional substrate 102.

As shown in FIG. 14, the examination apparatus further includes a pressure controller 279 for generating positive and negative pressures, a pressure transfer conduit 278 which allows fluid communication between the fitting portion 271 and the pressure controller 279, a valve 280 provided for the pressure transfer conduit 278, a cleaning fluid tank 282 for storing a cleaning fluid, a pump 285 for pressurizing the cleaning fluid tank 282, a tube 284 which allows fluid communication between the cleaning fluid tank 282 and the pump 285, a cleaning fluid supply conduit 281 which allows fluid communication between the fitting portion 271 and the cleaning fluid tank 282, a valve 283 provided for the cleaning fluid supply conduit 281, and a cleaning nozzle 286 provided at an end portion of the cleaning fluid supply conduit 281.

The reaction vessel 101 is mounted on the fitting portion 271. A negative pressure is generated by the pressure controller 279, and the valve 280 is opened to suck a sample solution from a sample vessel (not shown) into the reaction vessel 101. The sample solution is moved up and down through the three-dimensional substrate 102 by interacting positive and negative pressures using the pressure controller 279. After the end of the solution driving operation, the valve 280 is opened to release the reaction vessel 101 to atmospheric pressure.

Subsequently, in order to clean the lower end portion of the fitting portion 271, the valve 283 is opened, and the cleaning fluid tank 282 is pressurized by the pump 285. A cleaning fluid is then fed from the cleaning fluid tank 282 to the fitting portion 271.
The cleaning fluid fed to the fitting portion 271 is sprayed against the lower end portion of the fitting portion 271 by the cleaning nozzle 286, cleaning the lower end portion of the fitting portion 271.

After the cleaning operation, the valve 283 is closed. The valve 280 is then opened, and a positive pressure is generated by the pressure controller 279 to move the cleaning fluid below the three-dimensional substrate 102. Thereafter, an image is acquired by the CCD 273.

According to this embodiment, even if the imaging lens 272 becomes fogged or stained, imaging can be stably performed by cleaning the imaging lens 272.

### 12th Embodiment

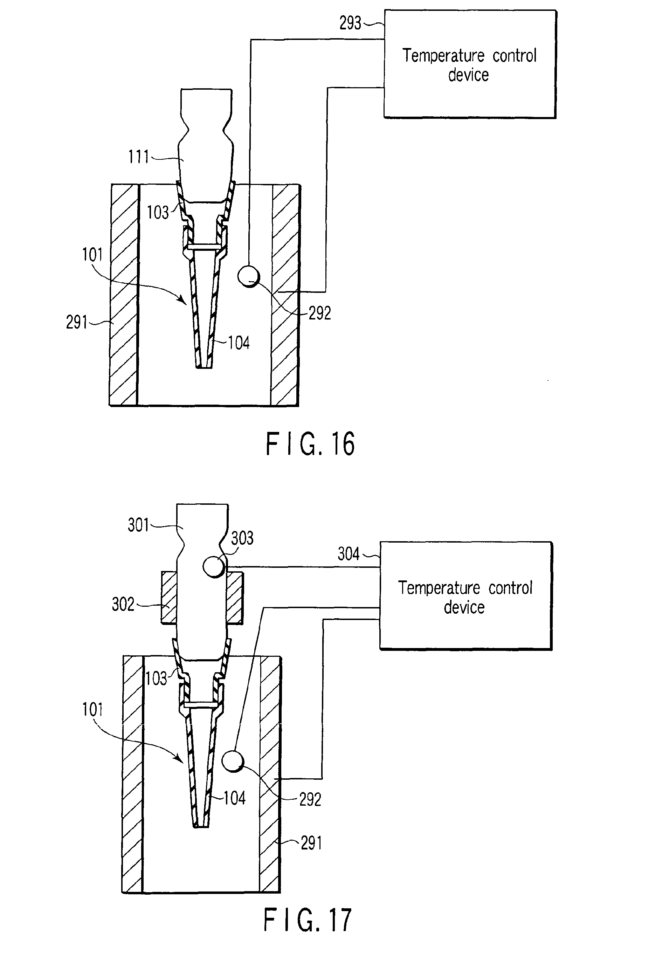

The present embodiment is directed to another examination apparatus using the reaction vessel according to the first embodiment. FIG. 16 schematically shows the arrangement of an examination apparatus according to the 12th embodiment of the present invention.

As shown in FIG. 16, the examination apparatus includes a fitting portion 111 on which a reaction vessel 101 is to be mounted, a heater 291 for controlling the temperature of the reaction vessel 101, a temperature sensor 292 for measuring the temperature of the heater 291, and a temperature control device 293 which controls the temperature of the heater 291 on the basis of the information obtained by the temperature sensor 292.

In this embodiment, the housing of the reaction vessel 101, i.e., a coupling portion 103 and a solution sucking portion 104, are made of PP, whose linear expansion coefficient is about 6 × 10⁻⁵. The fitting portion 111 is made of high-density PE, whose linear expansion coefficient is about 1 × 10⁻⁴. That is, the linear expansion coefficient of the fitting portion 111 is larger than that of the coupling portion 103 of the reaction vessel 101.

When the reaction vessel 101 is heated by the heater 291, the fitting portion 111 is also heated. With this heating, the coupling portion 103 of the reaction vessel 101 expands, and the diameter of its opening end increases. However, since the linear expansion coefficient of the fitting portion 111 is larger than that of the coupling portion 103, the fitting portion 111 expands more than the opening end.

According to this embodiment, therefore, while the temperature of the reaction vessel 101 is regulated, the reaction vessel 101 and the fitting portion 111 are kept in an airtight fashion.

### 13th Embodiment

The present embodiment is directed to another examination apparatus using the reaction vessel according to the first embodiment. FIG. 17 schematically shows the arrangement of an examination apparatus according to the 13th embodiment. Members denoted by the same reference numerals in FIG. 17 as those described above are substantially the same members denoted by them and described above, and a detailed description thereof will be omitted.

As shown in FIG. 17, the examination apparatus includes, in addition to a heater 291 and a temperature sensor 292, a fitting portion 301 on which a reaction vessel 101 is to be mounted, a heater 302 for controlling the temperature of the fitting portion 301, a temperature sensor 303 for measuring the temperature of the fitting portion 301, and a temperature control device 304 which controls the temperature of the heater 291 on the basis of the information obtained by the temperature sensor 292, and also controls the temperature of the temperature sensor 303 on the basis of the information obtained by the temperature sensor 303.

In this embodiment, as in the 12th embodiment, the housing of the reaction vessel 101, i.e., a coupling portion 103 and a solution sucking portion 104, are made of PP, whose linear expansion coefficient is about 6 × 10⁻⁵. The fitting portion 301 is made of stainless steel, whose linear expansion coefficient is about 7 × 10⁻⁶. Therefore, the linear expansion coefficient of the fitting portion 301 is smaller than that of the coupling portion 103 of the reaction vessel 101.

In this embodiment, the temperature of the fitting portion 301 is controlled by the temperature control device 304 so as to be always higher than the temperature of the reaction vessel 101. Preferably, the temperatures of the fitting portion 301 and the coupling portion 103 of the reaction vessel 101 are controlled so that their linear expansion amounts are almost equal to each other. For example, in order to control the temperature of the reaction vessel 101 to a temperature T optimal for a hybridization reaction of a gene, the temperature of the reaction vessel 101 is controlled by the temperature control device 304. In addition, the temperature of the fitting portion 301 is controlled to be higher than that of the reaction vessel 101 by 10°C by the temperature control device 304.

According to this embodiment, since the temperatures of the fitting portion 301 and a reaction vessel 101 are controlled by the temperature control device 304 so that their linear expansion amounts become almost equal to each other, the reaction vessel 101 and the fitting portion 301 of the coupling portion 103 are properly kept in an airtight fashion.

### 14th Embodiment

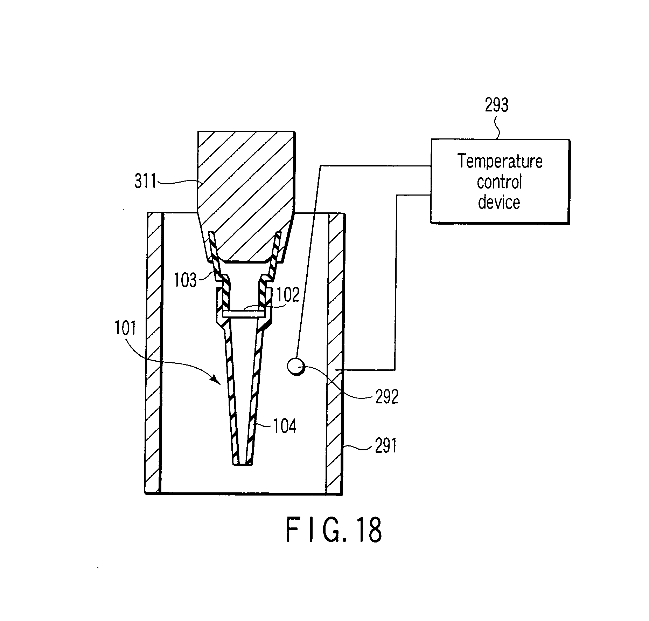

The present embodiment is directed to an examination apparatus using the reaction vessel according to the first embodiment. FIG. 18 schematically shows the arrangement of an examination apparatus according to the 14th embodiment of the present invention. Members denoted by the same reference numerals in FIG. 18 as those described above are substantially the same members denoted by them and described above, and a detailed description thereof will be omitted.

As shown in FIG. 18, the examination apparatus includes a fitting portion 301 on which a reaction vessel 101 is to be mounted, a heater 291 for controlling the temperature of the reaction vessel 101, a temperature sensor 292 for measuring the temperature of the heater 291, and a temperature control device 293 which controls the temperature of the heater 291 on the basis of the information obtained by the temperature sensor 292.

In this embodiment, the housing of the reaction vessel 101, i.e., the coupling portion 103 and the solution sucking portion 104, are made of PP, and a fitting portion 311 is made of stainless steel. The fitting portion 311 has an inner fitting surface facing the inner surface of the coupling portion 103 of the reaction vessel 101 and an outer fitting surface facing the outer surface of the coupling portion 103 of the reaction vessel 101.

A case wherein the temperature of a sample solution is controlled to be higher than a reference temperature will be described below.

The reaction vessel 101 in which a sample solution is sucked by a pressure controller (not shown) is set in the heater 291. A target temperature is set in the temperature control device 293. The temperature control device 293 energizes the heater 291 until the set temperature is reached on the basis of temperature information from the temperature sensor 292. The temperatures of the reaction vessel 101, sample solution, and fitting portion 311 are simultaneously regulated by heat conduction from the housing of the reaction vessel 101, i.e., the coupling portion 103 and the solution sucking portion 104.

With this temperature regulating, the coupling portion 103 of the reaction vessel 101 expands. Owing to this expansion, the wall of the coupling portion 103 increases in thickness. In addition, owing to the difference in linear expansion coefficient between the coupling portion 103 and the fitting portion 311, the inner surface of the coupling portion 103 tries to separate from the inner fitting surface of the fitting portion 311. However, before the inner surface of the coupling portion 103 separates from the inner fitting surface of the fitting portion 311, the outer surface of the coupling portion 103 comes into contact with the outer fitting surface of the fitting portion 311 because of increases in the diameter of the opening end of the coupling portion 103 and the thickness of the wall.

In other words, the coupling portion 103 and the fitting portion 311 are designed such that the outer surface of the coupling portion 103 comes into contact with the outer fitting surface of the fitting portion 311 before the inner surface of the coupling portion 103 separates from the inner fitting surface of the fitting portion 311.

For this reason, according to this embodiment, the coupling portion 103 of the reaction vessel 101 and the fitting portion 311 are always kept in an airtight fashion.

### 15th Embodiment

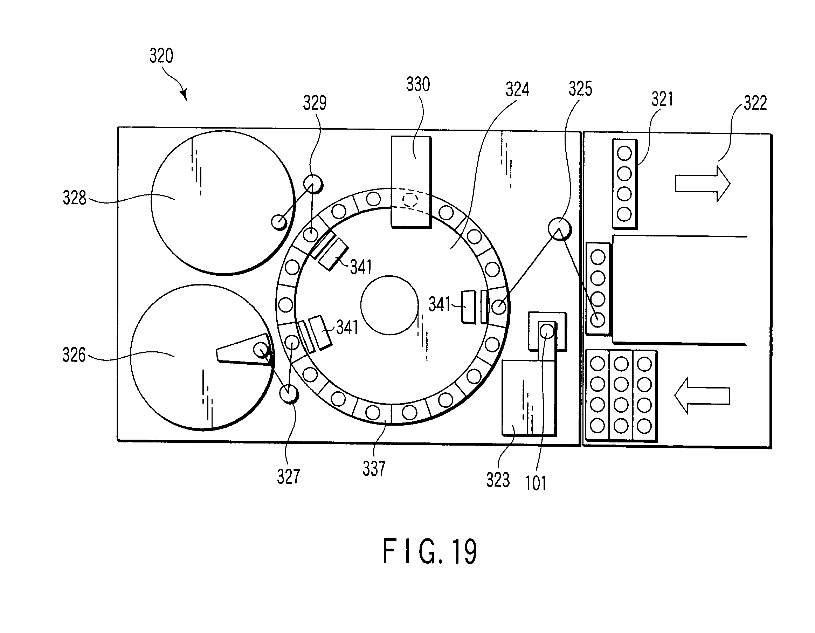

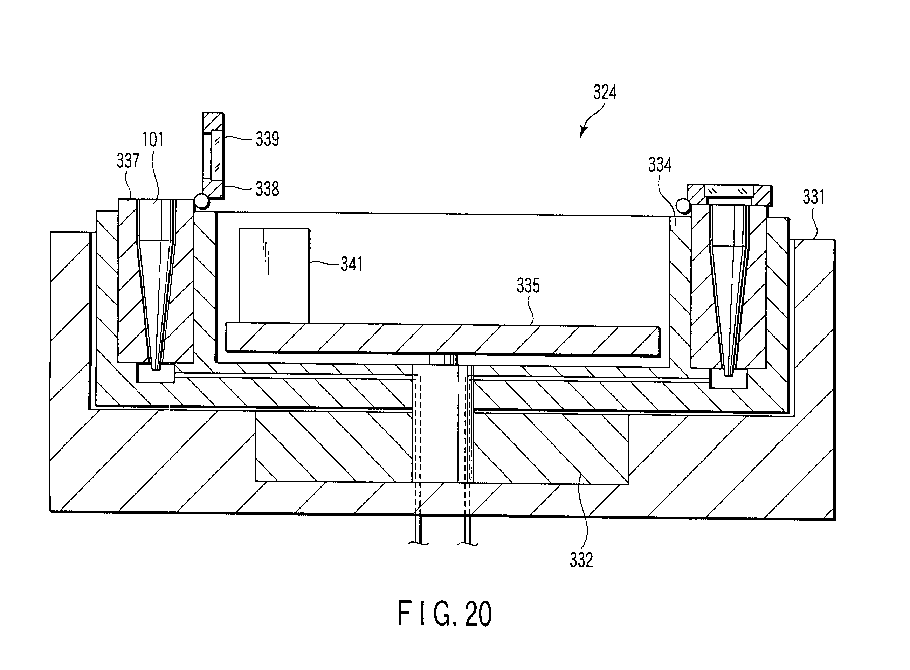

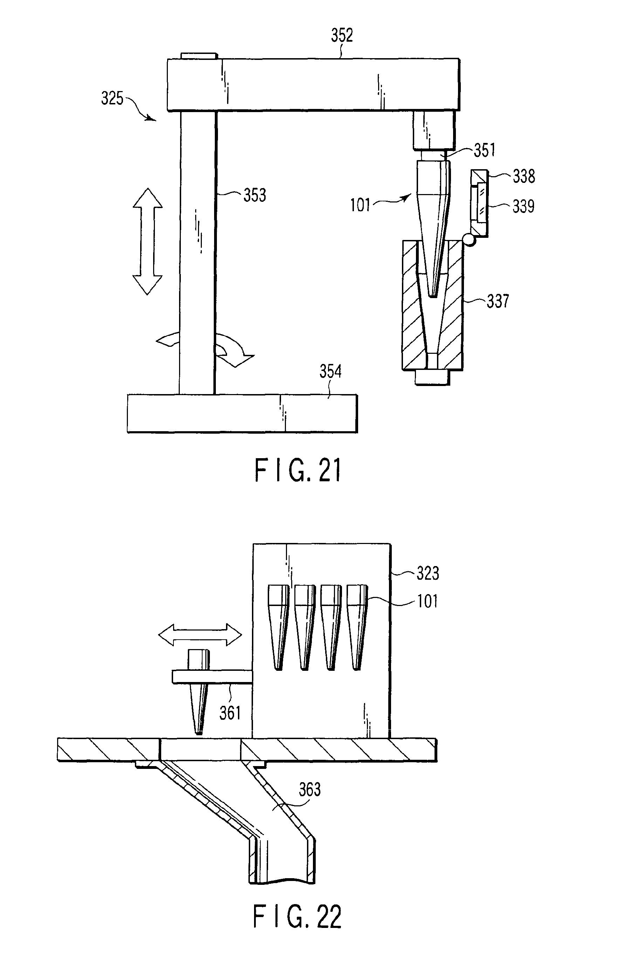

The present embodiment is directed to another examination apparatus using the reaction vessel according to the first embodiment. FIG. 19 schematically shows the arrangement of an examination apparatus according to the 15th embodiment of the present invention. FIG. 20 schematically shows a cross-section of the turntable shown in FIG. 19. FIG. 21 schematically shows the sampling device shown in FIG. 19. FIG. 22 schematically shows a cross-section of a peripheral portion of the reaction vessel supply device shown in FIG. 19.

As shown in FIG. 19, an examination device 320 comprises a sample supply unit 322, reaction vessel supply device 323, sampling device 325, turntable 324, first solution rack 326, first dispenser 327, second solution rack 328, second dispenser 329, and detection apparatus 330.

The sample supply unit 322 sequentially supplies, for examination, a rack 321 housing a plurality of sample vessels in which sample solutions are respectively dispensed. As shown in FIG. 22, the reaction vessel supply device 323 houses a plurality of reaction vessels 101, and supplies the reaction vessels 101 one by one by using an arm 361.

As shown in FIG. 19, the turntable 324 has a plurality of reaction vessel housing portions 337 placed on a circumference. More specifically, as shown in FIG. 20, the turntable 324 includes a rotating member 334 which holds the plurality of reaction vessel housing portions 337 and a driving unit 332 for rotating the rotating member 334 with respect to a base 331.

Each reaction vessel housing portion 337 has a housing space for housing the reaction vessel 101. The housing space is in fluid communication, through a conduit, with a pressure source (not shown) placed below the base 331. The reaction vessel housing portion 337 includes a lid 338 which is openable and closable. The lid 338 includes an optical window 339 which allows optical observation from above using the detection apparatus 330.

The turntable 324 further comprises lid opening/closing mechanisms 341 for opening and closing the lids 338 of the reaction vessel housing portions 337 and a fixed disk 335 which supports the lid opening/closing mechanisms 341. The fixed disk 335 is fixed to the base 331 and does not rotate. As shown in FIG. 19, the lid opening/closing mechanisms 341 are provided at work positions where the sampling device 325, first dispenser 327, and second dispenser 329 operate.

As shown in FIG. 21, the sampling device 325 includes a fitting portion 351 on which the reaction vessel 101 is to be mounted, an arm 352 which supports the fitting portion 351, and a support column 353 which supports the arm 352. The support column 353 can be moved up and down and rotated with respect to a base 354 by a driving mechanism (not shown). Therefore, the sampling device 325 is designed such that the reaction vessel 101 supplied from the reaction vessel supply device 323 can be mounted on the fitting portion 351 by the vertical movement and rotation of the arm 352 which supports the fitting portion 351. Although not shown in particular, the sampling device 325 also has a mechanism of detaching the reaction vessel 101 mounted on the fitting portion 351.

Although not shown, as in the embodiments described above, the fitting portion 351 is in fluid communication with a pressure controller through a conduit, and the sampling device 325 can supply positive and negative pressures to the reaction vessel 101 mounted on the fitting portion 351.

With this arrangement, in FIG. 19, the sampling device 325 receives the reaction vessel 101 supplied from the reaction vessel supply device 323, and moves the reaction vessel 101 to the sample supply unit 322. The sampling device 325 then sucks a sample solution into the reaction vessel 101, and moves the reaction vessel 101 to the turntable 324, supplying the reaction vessel 101 to the reaction vessel housing portion 337.

The first solution rack 326 and the second solution rack 328 are substantially identical structures, and store solutions necessary for examination. For example, in each rack, a vessel in which a reagent necessary for examination is dispensed is stored at a proper temperature and humidity. The vessel for the necessary reagent is placed at a suction position.

The first dispenser 327 and the second dispenser 329, which are substantially identical structures, can dispense solutions from the first solution rack 326 and the second solution rack 328 into the reaction vessel 101, respectively.

The detection apparatus 330 includes, for example, a fluorescence microscope, and can sense a fluorescent image of the three-dimensional substrate in the reaction vessel 101.

The examination device 320 of this embodiment operates as follows.

First of all, the reaction vessel 101 supplied from the reaction vessel supply device 323 is mounted on the fitting portion 351 of the sampling device 325. The sampling device 325 sucks a sample solution from the sample rack 321 of the sample supply unit 322 into the reaction vessel 101, and places the reaction vessel 101, in which the sample solution is sucked, in the reaction vessel housing portion 337 of the turntable 324. The lid 338 of the reaction vessel housing portion 337 is then closed by the lid opening/closing mechanism 341.

The reaction vessel 101 housed in the reaction vessel housing portion 337 sequentially passes through the first dispenser 327, second dispenser 329, and detection apparatus 330 upon rotation of the turntable 324, and finally returns to the sampling device 325.

While the reaction vessel 101 is transferred from the sampling device 325 to the first dispenser 327, the sample solution in the reaction vessel 101 is driven by repeatedly applying positive and negative pressures to the reaction vessel housing portion 337, executing a complement fixation reaction.

When the reaction vessel 101 reaches the first dispenser 327, the lid 338 of the reaction vessel housing portion 337 is opened by the lid opening/closing mechanism 341. A cleaning fluid is dispensed into the reaction vessel 101 by using the first dispenser 327, and the sample solution is washed away by repeatedly applying positive and negative pressures to the reaction vessel housing portion 337. Thereafter, the lid 338 of the reaction vessel housing portion 337 is closed by the lid opening/closing mechanism 341.

When the reaction vessel 101 reaches the second dispenser 329, the lid 338 of the reaction vessel housing portion 337 is opened by the lid opening/closing mechanism 341. A chemiluminescent substrate is dispensed from the second dispenser 329 into the reaction vessel 101, and is promoted by repeatedly applying positive and negative pressures to the reaction vessel housing portion 337. Thereafter, the chemiluminescent substrate is washed away with a cleaning fluid, and the lid 338 of the reaction vessel housing portion 337 is closed by the lid opening/closing mechanism 341.

When the reaction vessel 101 reaches the detection apparatus 330 afterward, an image of a three-dimensional substrate in the reaction vessel 101 is sensed by the detection apparatus 330, and a luminance at each spot on the three-dimensional substrate is measured by image analysis software.

When the reaction vessel 101 having undergone the measurement reaches the sampling device 325, the sampling device 325 extracts the reaction vessel 101 from the reaction vessel housing portion 337 of the turntable 324, and discards the reaction vessel 101 into a discard hole 363 shown in FIG. 22.

According to this embodiment, since no apparatus for handling the reaction vessel 101 is required, the examination apparatus can be reduced in size.

### 16th Embodiment

The present embodiment is directed to a method of manufacturing a new reaction vessel for detecting biorelated substances appearing in the embodiments described above. Assume that in the embodiment described below, a nylon filter is applied to a three-dimensional substrate.

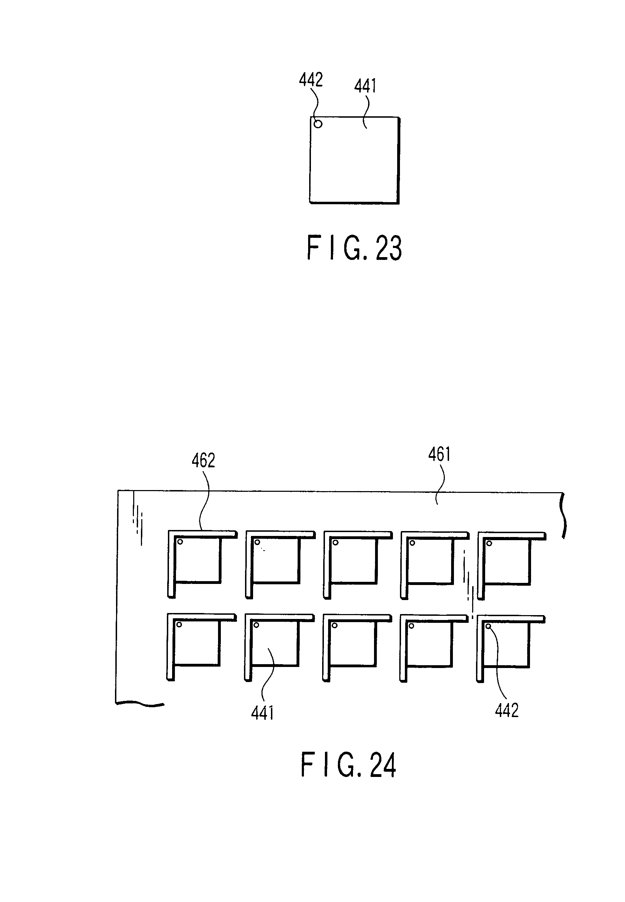

First of all, as shown in FIG. 23, a square nylon filter 441 is prepared, and a mark 442 is formed on a portion of the periphery.

As shown in FIG. 24, the nylon filters 441 are then placed on a stage 461 of an inkjet printer. At this time, each nylon filter 441 is abutted against an abutment portion 462 on the stage 461 to be positioned. When the nylon filter 441 is to be abutted against the abutment portion 462, the direction of the nylon filter 441 is determined by the mark 442.

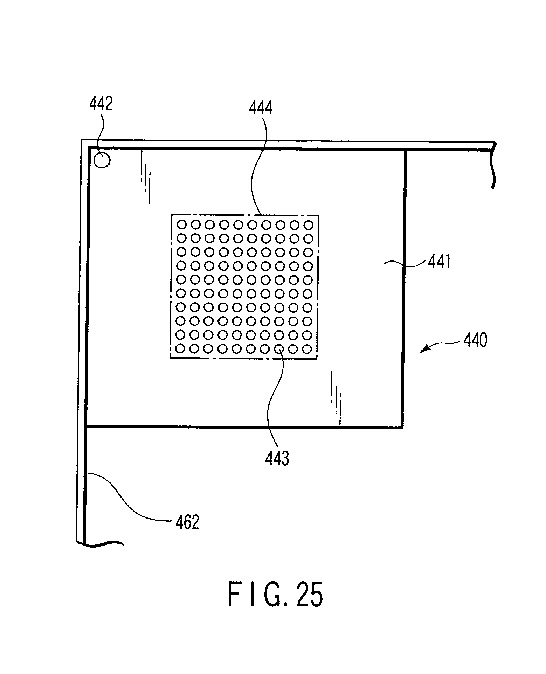

Subsequently, as shown in FIG. 25, for example, 100 kinds of nucleic acid probes 443 are spotted at predetermined positions on the nylon filter 441 by the inkjet printer to form a spot region 444. With this process, a three-dimensional substrate 440 on which probes are immobilized is manufactured. For example, the spot diameter and the spot intervals are adjusted to 100 µm and 200 µm, respectively.

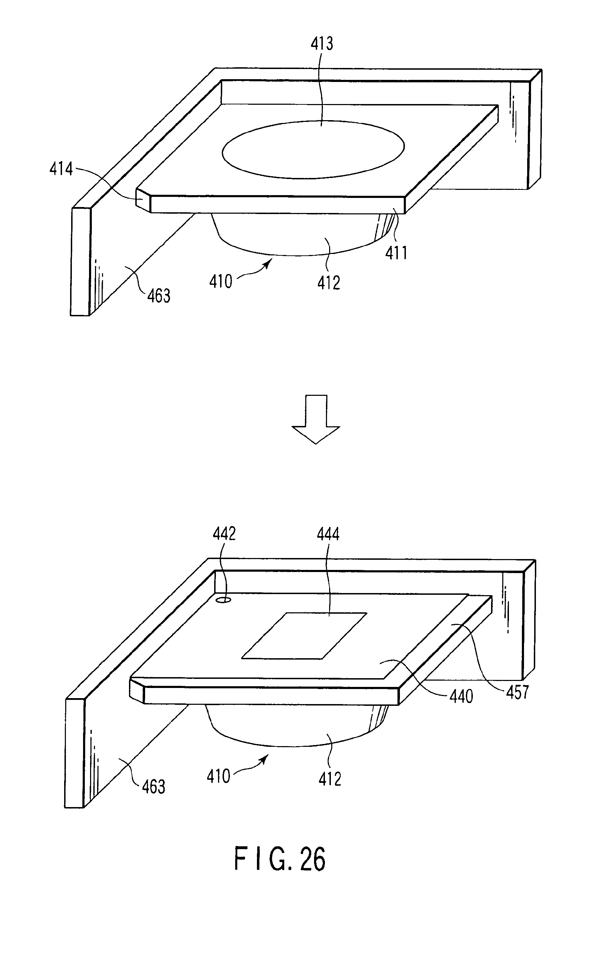

As shown in FIG. 26, a solution sucking portion body 410 is abutted against an abutment jig 463 to be positioned. The solution sucking portion body 410, which comprises a plate-like portion 411 having a notched portion 414 at a corner and a truncated cone portion 412 protruding from the plate-like portion 411, has a through hole 413 extending through the plate-like portion 411 and the truncated cone portion 412. When the solution sucking portion body 410 is to be abutted against the abutment jig 463, the direction of the solution sucking portion body 410 is determined by the notched portion 414.

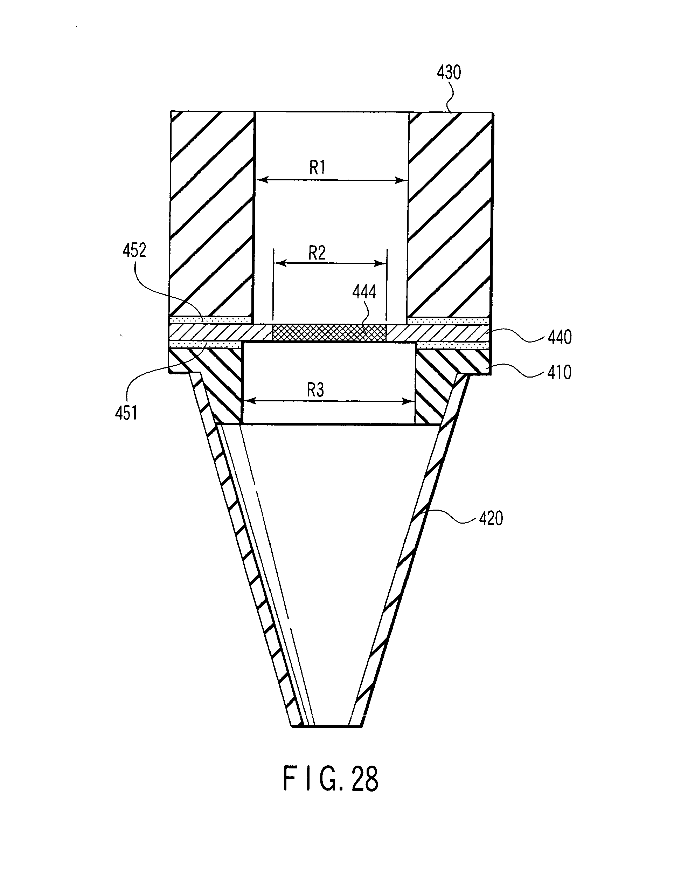

In addition, an acrylic adhesive 451 (see FIG. 28) is applied to the upper surface of the plate-like portion 411 of the solution sucking portion body 410 which is abutted against the abutment jig 463. The three-dimensional substrate 440 manufactured in advance is then abutted against the abutment jig 463 to be positioned, and is bonded to the upper surface of the plate-like portion 411 of the solution sucking portion body 410. When the three-dimensional substrate 440 is to be abutted against the abutment jig 463, the direction of the three-dimensional substrate 440 is determined by the position of the mark 442 relative to the notched portion 414 of the plate-like portion 411. With this operation, the three-dimensional substrate 440 is always bonded to the solution sucking portion body 410 in the same direction. The spot region 444 is positioned inside the through hole 413. Since the plate-like portion 411 of the solution sucking portion body 410 is coupled to the three-dimensional substrate 440 with an adhesive, they are kept in an airtight fashion.

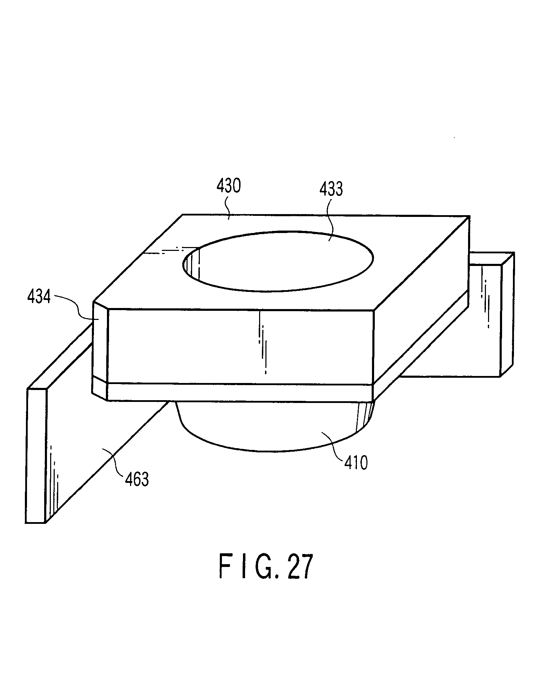

As shown in FIG. 27, thereafter, a coupling portion 430 is attached to the solution sucking portion body 410. The coupling portion 430, which comprises a plate-like member, has a notched portion 434 at a corner and a through hole 433 in the center. The coupling portion 430 has almost the same size as that of the plate-like portion 411 of the solution sucking portion body 410. When the coupling portion 430 is properly fitted to the plate-like portion 411, the notched portions 434 and 414 are aligned with each other.

An acrylic adhesive 452 (see FIG. 28) is applied to proper portions of the plate-like portion 411 of the solution sucking portion body 410 and of the three-dimensional substrate 440. The notched portion 434 of the coupling portion 430 is aligned with the notched portion 414 of the solution sucking portion body 410, and the coupling portion 430 is abutted against the abutment jig 463 to be positioned, thus bonding the coupling portion 430 to the solution sucking portion body 410. Since the three-dimensional substrate 440 is coupled to the coupling portion 430 with an adhesive, they are kept in an airtight fashion.

Finally, as shown in FIG. 28, a tapered cylindrical member 420 is bonded to the truncated cone portion 412 of the solution sucking portion body 410, or fixed thereto by fitting if the cylindrical member 420 is to be detachable, completing a reaction vessel.

Referring to FIG. 28, reference symbol R1 denotes the inner diameter of the through hole 433 of the coupling portion 430; R2, the maximum distance of the spot region 444 of the three-dimensional substrate 440; and R3, the inner diameter R3 of the through hole 413 of the solution sucking portion body 410. They satisfy R3 > R1 > R2. With this arrangement, when the spots of the three-dimensional substrate 440 are observed, all the probe spots can be observed, and the adhesive 451 for the fixation of the solution sucking portion body 410 is not observed.

When the coupling portion 430, three-dimensional substrate 440, and solution sucking portion body 410 are manufactured such that when they are properly abutted against the abutment jig 463, the center of the through hole 433, the center of the spot region 444, and the center of the through hole 413 are aligned with each other. Since the probe spots are stably placed at the same positions, the arrangement of the probe spots can be easily checked.

### 17th Embodiment

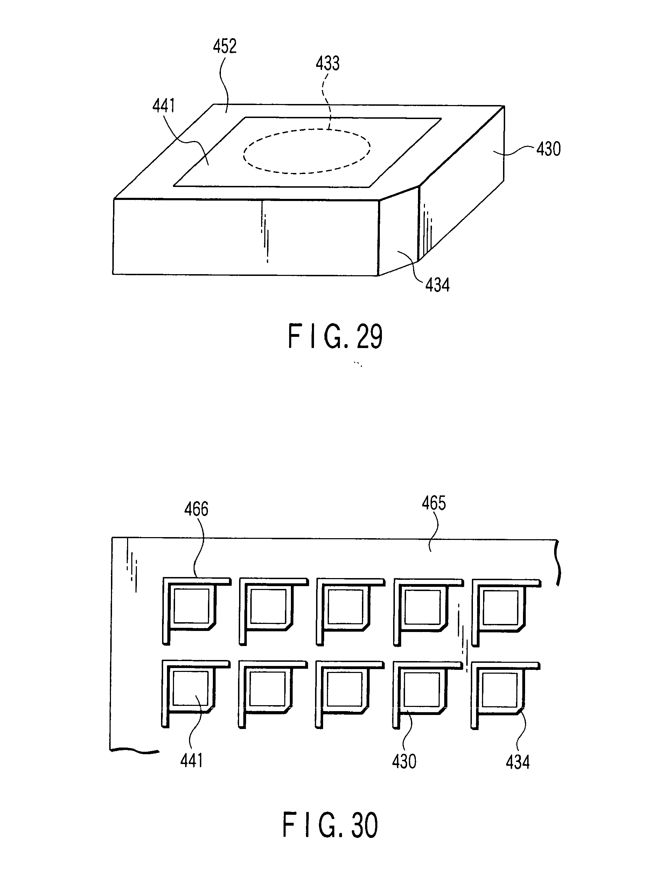

The present embodiment is directed to another method of manufacturing a reaction vessel. The manufacturing method of this embodiment will be described below with reference to FIGS. 29 to 31. The same reference numerals as in the 16th embodiment denote the same members in FIGS. 29 to 31, and a detailed description thereof will be omitted.

First of all, as shown in FIG. 29, a coupling portion 430 is prepared, and an acrylic adhesive is applied to a proper portion of the coupling portion 430. A square nylon filter 441 is then bonded to the coupling portion 430 so as to cover a through hole 433. Since the nylon filter 441 is coupled to the coupling portion 430 with an acrylic adhesive, they are kept in an airtight fashion.

As shown in FIG. 30, the coupling portion 430 to which the nylon filter 441 is bonded is then placed on a stage 465 of the inkjet printer. At this time, the coupling portion 430 is abutted against an abutment portion 466 on the stage 465 to be positioned. When the coupling portion 430 is to be abutted against an abutment portion 462, the direction of the coupling portion 430 is determined by a notched portion 434.

Subsequently, for example, 100 kinds of nucleic acid probes are spotted at predetermined positions on the nylon filter 441 by the inkjet printer to form a spot region. With this process, a three-dimensional substrate 440 on which probes are immobilized is manufactured. For example, the spot diameter and the spot intervals are adjusted to 100 µm and 200 µm, respectively.

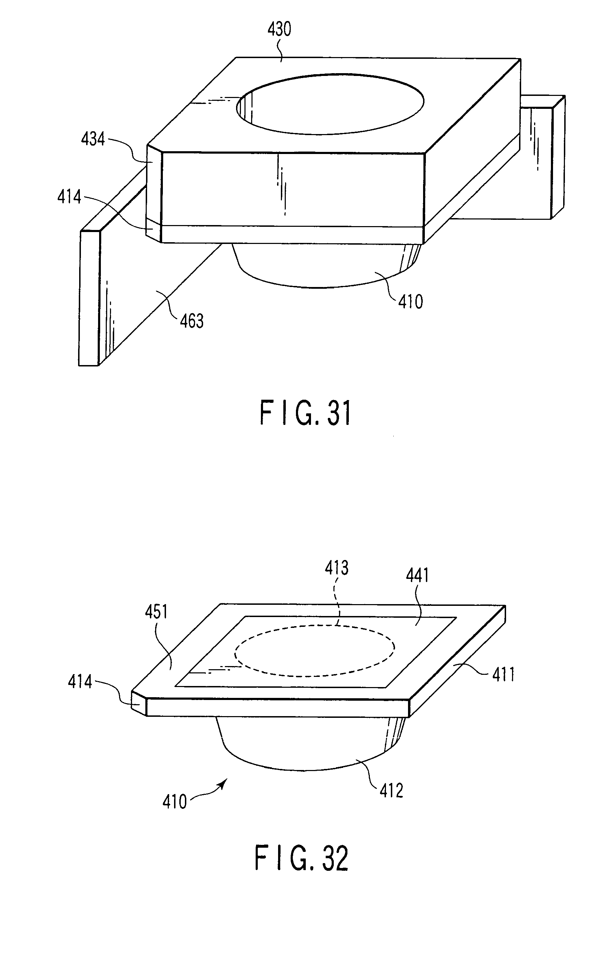

As shown in FIG. 31, the solution sucking portion body 410 is abutted against an abutment jig 463 to be positioned. When a solution sucking portion body 410 is to be abutted against the abutment jig 463, the direction of the solution sucking portion body 410 is determined by a notched portion 414. In addition, an acrylic adhesive 452 is applied to a proper portion of a plate-like portion 411 of the solution sucking portion body 410. The notched portion 434 of the coupling portion 430 is aligned with the notched portion 414 of the solution sucking portion body 410, and the coupling portion 430 is abutted against the abutment jig 463 to be positioned, thus bonding the coupling portion 430 to the solution sucking portion body 410. Since the three-dimensional substrate 440 is coupled to the solution sucking portion body 410 with an adhesive, they are kept in an airtight fashion.

Finally, as in the 16th embodiment, a tapered cylindrical member 420 is bonded to a truncated cone portion 412 of the solution sucking portion body 410, or fixed thereto by fitting if the cylindrical member 420 is to be detachable, completing a reaction vessel similar to the reaction vessel shown in FIG. 28.

The reaction vessel manufactured in this embodiment is the same as that manufactured in the 16th embodiment except that no mark is formed on the nylon filter 441.

### 18th Embodiment

The present embodiment is directed to another method of manufacturing a reaction vessel. The manufacturing method of this embodiment will be described with reference to FIGS. 32 to 34. The same reference numerals as in the 16th embodiment denote the same members in these drawings, and a detailed description thereof will be omitted.

First of all, as shown in FIG. 32, a solution sucking portion body 410 is prepared, and an acrylic adhesive is applied to a proper portion of a plate-like portion 411 of the solution sucking portion body 410.
A square nylon filter 441 is then bonded to the solution sucking portion body 410 so as to cover a through hole 413. Since the nylon filter 441 is coupled to the solution sucking portion body 410 with an acrylic adhesive, they are kept in an airtight fashion.

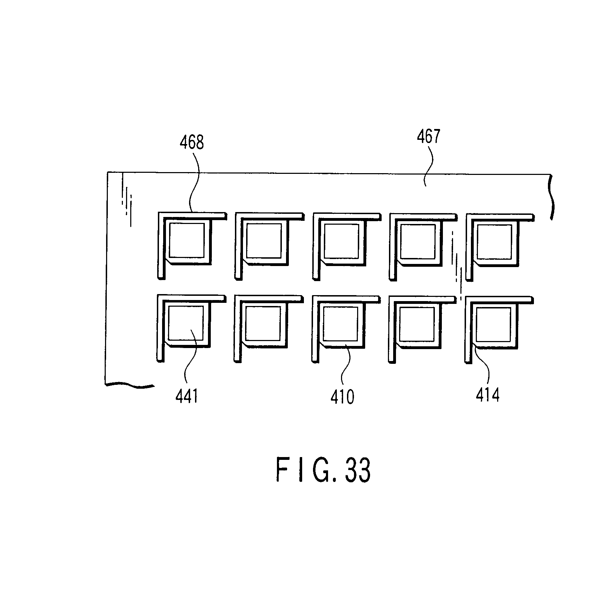

As shown in FIG. 33, the solution sucking portion body 410 to which the nylon filter 441 is bonded is placed on a stage 467 of an inkjet printer. At this time, the solution sucking portion body 410 is abutted against an abutment portion 468 on the stage 467 to be positioned. When the solution sucking portion body 410 is abutted against the abutment portion 468, the direction of the solution sucking portion body 410 is determined by a notched portion 413.

Subsequently, for example, 100 kinds of nucleic acid probes are spotted at predetermined positions on the nylon filter 441 by the inkjet printer to form a spot region. With this process, a three-dimensional substrate 440 on which probes are immobilized is manufactured. For example, the spot diameter and the spot intervals are adjusted to 100 µm and 200 µm, respectively.

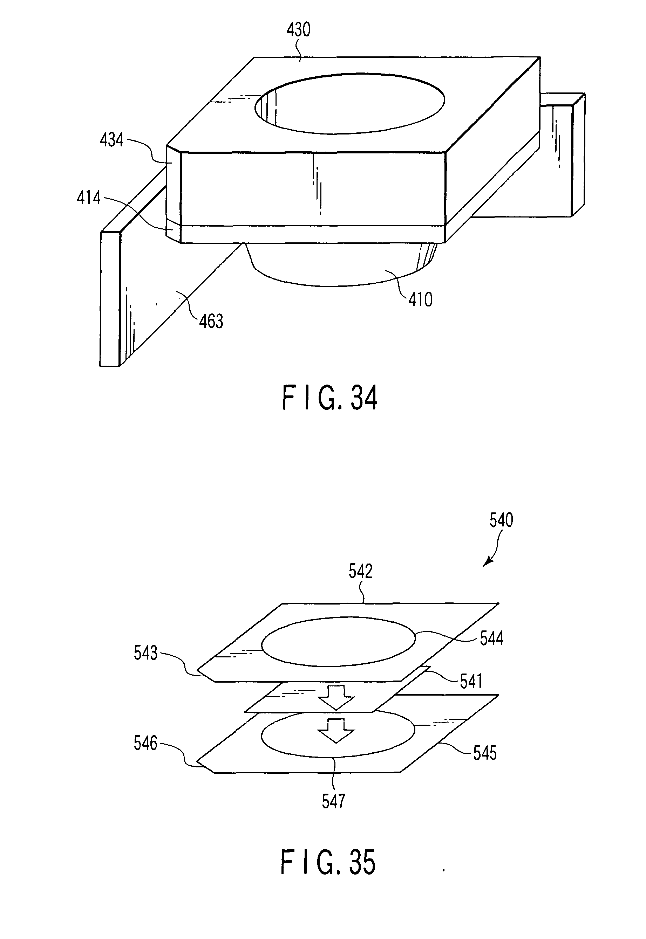

As shown in FIG. 34, the solution sucking portion body 410 is abutted against an abutment jig 463 to be positioned. When the abutment jig 463 is to be abutted against the solution sucking portion body 410, the direction of the solution sucking portion body 410 is determined by the notched portion 414. In addition, an acrylic adhesive 452 is applied to proper portions of the plate-like portion 411 of the solution sucking portion body 410 and the three-dimensional substrate 440, and a notched portion 434 of a coupling portion 430 is aligned with the notched portion 414 of the solution sucking portion body 410. The coupling portion 430 is then abutted against the abutment jig 463 to be positioned, and is bonded to the solution sucking portion body 410. Since the three-dimensional substrate 440 and the coupling portion 430 are coupled to each other with an adhesive, they are kept in an airtight fashion.

Finally, as in the 16th embodiment, a tapered cylindrical member 420 is bonded to a truncated cone portion 412 of the solution sucking portion body 410, or fixed thereto by fitting if the cylindrical member 420 is to be detachable, completing a reaction vessel similar to the reaction vessel shown in FIG. 28.

The reaction vessel manufactured in this embodiment is the same as that manufactured in the 16th embodiment except that no mark is formed on the nylon filter 441.

In the 16th, 17th, and 18th embodiments, an acrylic adhesive is used to join the nylon filter 441 to the solution sucking portion body 410 and join the nylon filter 441 to the coupling portion 430. However, a means other than an acrylic adhesive, e.g., ultrasonic welding, heat welding, or laser welding, may be used.

### 19th Embodiment

The present embodiment is directed to another method of manufacturing a reaction vessel. The manufacturing method of this embodiment will be described below with reference to FIGS. 32 to 34.

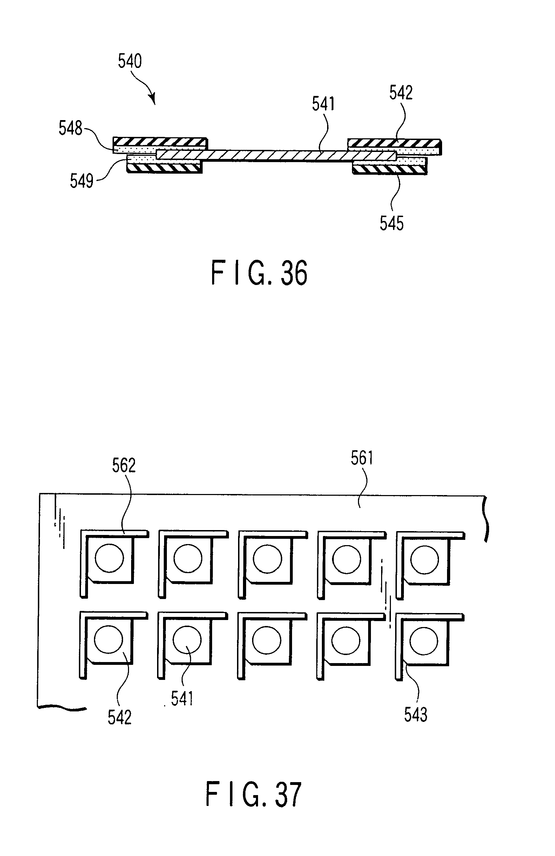

First of all, as shown in FIG. 35, a square nylon filter 541, protective member 542, and protective member 545 are prepared. The protective member 542, which is a rectangular thin plate member, has a notched portion 543 at a corner and a circular opening 544 in the center. The protective member 545, which is a rectangular thin plate member, has a notched portion 546 at a corner and a circular opening 547 in the center. As is obvious from FIG. 36, the protective member 542 is one size larger than the protective member 545. The opening 544 of the protective member 542 is one size smaller than the opening 547 of the protective member 545.

Referring to FIG. 35, an acrylic adhesive 548 (see FIG. 36) is applied to a proper portion of the lower surface of the protective member 542, and an acrylic adhesive 549 (see FIG. 36) is applied to a proper portion of the upper surface of the protective member 545. The protective member 542 and the protective member 545 are then bonded to each other with the nylon filter 541 held between them. With this process, a three-dimensional substrate chip 540 before the formation of probe spots is manufactured. Since the nylon filter 541 and the protective member 542 are coupled to each other with an adhesive, they are kept in an airtight fashion. Likewise, the nylon filter 541 and the protective member 545 are kept in an airtight fashion.

As shown in FIG. 37, each three-dimensional substrate chip 540 manufactured in advance is placed on a stage 561 of the inkjet printer with the protective member 542 facing up. At this time, the three-dimensional substrate chip 540 is abutted against an abutment portion 562 on the stage 561 to be positioned. When the three-dimensional substrate chip 540 is to be abutted against the abutment portion 562, the direction of the three-dimensional substrate chip 540 is determined by the notched portion 543 of the protective member 542.

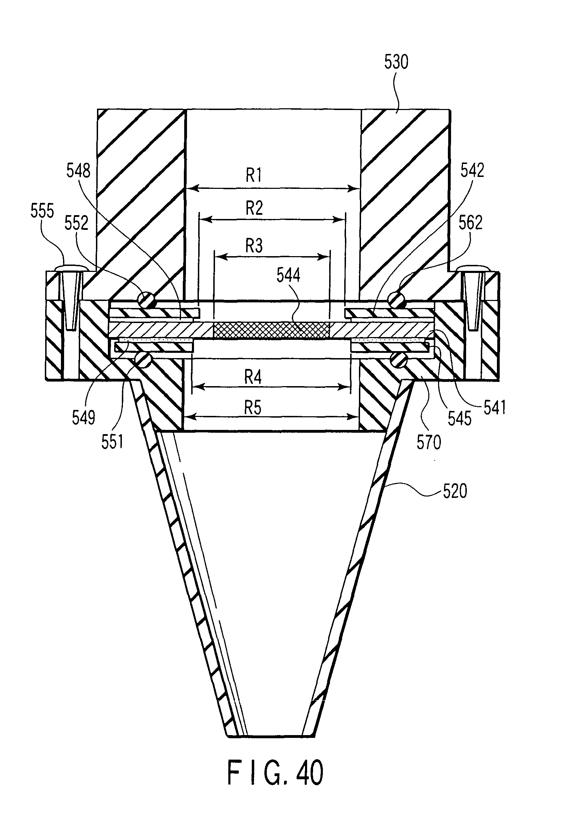

Subsequently, for example, 100 kinds of nucleic acid probes are spotted at predetermined positions on the nylon filter 541 by the inkjet printer to form a spot region 544 (see FIG. 40). With this process, probes are immobilized on the nylon filter 541 of the three-dimensional substrate chip 540. For example, the spot diameter and the spot intervals are adjusted to 100 µm and 200 µm, respectively.

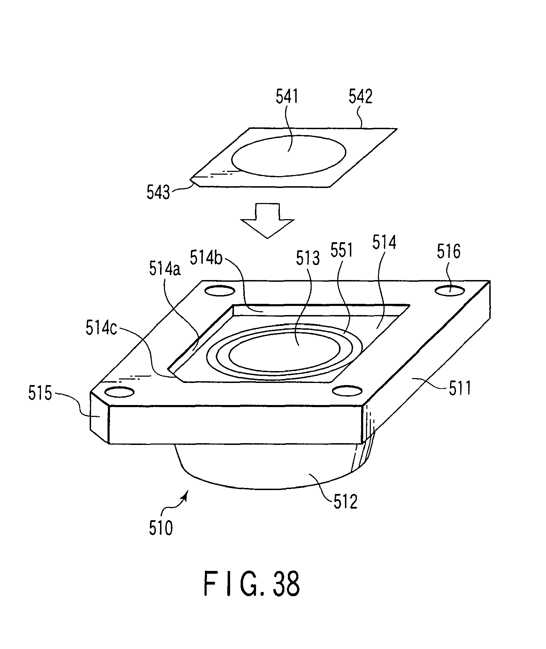

The three-dimensional substrate chip 540 is then attached on a solution sucking portion body 510 shown in FIG. 38. As shown in FIG. 38, the solution sucking portion body 510, which comprises a plate-like portion 511 having a notched portion 515 at a corner and a truncated cone portion 512 protruding from the plate-like portion 511, has a through hole 513 extending through the plate-like portion 511 and the truncated cone portion 512. The plate-like portion 511 has a recess portion 514 which can house the three-dimensional substrate chip 540. The recess portion 514 has abutment surfaces 514a and 514b against which two sides of the three-dimensional substrate chip 540 are abutted. The recess portion 514 conforms to the outer shape of the three-dimensional substrate chip 540, and has an oblique side portion 514c at a corner. The inclined portion 514c is positioned near the notched portion 515. Screw holes 516 for fastening a coupling portion 530 (to be described later) with screws are formed at the four corners of the plate-like portion 511.

Attachment of the three-dimensional substrate chip 540 on the solution sucking portion body 510 is performed by placing an O-ring 551 on the bottom surface of the recess portion 514 of the solution sucking portion body 510 and placing the three-dimensional substrate chip 540 on the O-ring.

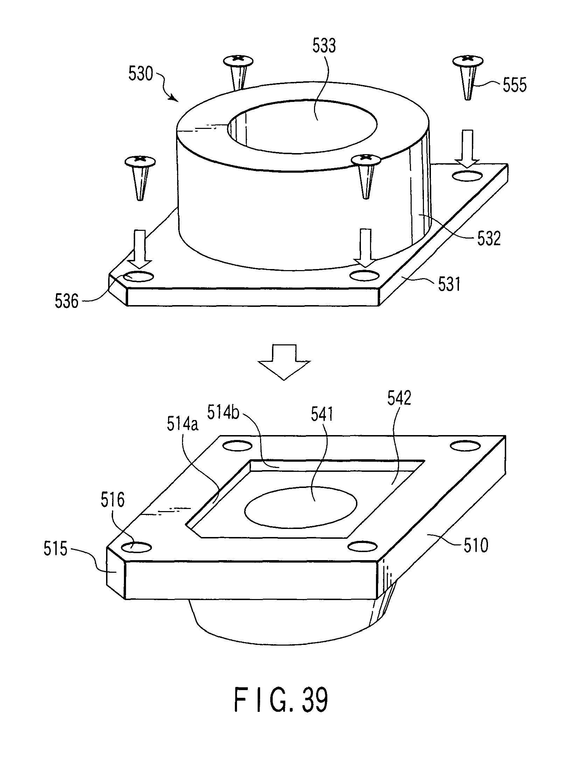

Subsequently, the coupling portion 530 shown in FIG. 39 is attached on the solution sucking portion body 510. As shown in FIG. 39, the coupling portion 530 comprises a plate-like portion 531 and a cylindrical portion 532 protruding from the plate-like portion 531, and has a through hole 533 extending through the plate-like portion 531 and the cylindrical portion 532. The plate-like portion 531 has through holes 536 through which screws 555 for fixing the coupling portion 530 to the solution sucking portion body 510 extend.

The coupling portion 530 is attached on the solution sucking portion body 510 as follows. An O-ring 552 (see FIG. 40) is placed on the three-dimensional substrate chip 540 housed in the recess portion 514 of the solution sucking portion body 510. The screws 555 are made to extend through the through holes 536 at the four corners of the plate-like portion 531 of the coupling portion 530, and are fastened in the screw holes 516 at the four corners of the plate-like portion 511 of the solution sucking portion body 510.

As shown in FIG. 40, while the screws 555 are properly fastened, the coupling portion 530 is in contact with the solution sucking portion body 510, and the three-dimensional substrate chip 540 is in contact with the solution sucking portion body 510 through the O-ring 551 or a gasket. In this state, the three-dimensional substrate chip 540 and the solution sucking portion body 510 are kept in an airtight fashion. In addition, the three-dimensional substrate chip 540 is in contact with the coupling portion 530 through the O-ring 552, and the three-dimensional substrate chip 540 and the coupling portion 530 are kept in an airtight fashion.

Finally, as shown in FIG. 40, a tapered cylindrical member 520 is bonded to the truncated cone portion 512 of the solution sucking portion body 510, or fixed thereto by fitting if the cylindrical member 420 is to be detachable, completing a reaction vessel.

Referring to FIG. 40, reference symbol R1 denotes the inner diameter of the through hole 533 of the coupling portion 530; R2, the inner diameter of the opening 544 of the protective member 542 of the three-dimensional substrate chip 540; R3, the maximum distance of the spot region 544; R4, the inner diameter of the opening 547 of the protective member 545; and R5, the inner diameter of the through hole 513 of the solution sucking portion body 510. They satisfy R1 > R2, R4 > R2, and R5 > R4.

The coupling portion 530, three-dimensional substrate chip 540, and solution sucking portion body 510 are manufactured so that when they are assembled in accordance with a proper positional relationship, the center of the through hole 533, the center of the spot region 544, and the center of the through hole 513 are aligned with each other.

According to the relationships of R1 > R2 and R5 > R4, the three-dimensional substrate chip 540 and the solution sucking portion body 510 are kept in an airtight fashion by the O-ring 551, and the three-dimensional substrate chip 540 and the coupling portion 530 are kept in an airtight fashion by the O-ring 552.

In addition, according to the relationships of R4 > R2 and R5 > R4, when the spots on the three-dimensional substrate chip 540 are observed, the protective member 545, the adhesive 549 applied to the protective member 545, and the solution sucking portion body 510 are not observed.

The reaction vessel manufactured in this embodiment is substantially the same as that manufactured in the 16th embodiment.

In the embodiments described above, the members constituting the reaction vessel are fixed by an adhesive, fitting, and screws. However, fixing methods to be used are not limited to them as long as the reaction vessel can be kept in an airtight fashion in which a solution can be sucked and discharged. For example, the members constituting the reaction vessel can be fixed by using heat welding or ultrasound welding as another method.

When a tapered cylindrical member is fitted on the truncated cone portion of the solution sucking portion body or fixed thereto with screws so as to be detachable, detection can be performed after the tapered cylindrical member is detached upon completion of a reaction or a cleaning process. This arrangement is especially effective when the reaction apparatus and the detection apparatus are discrete apparatuses, allowing the size of the detection apparatus to be reduced. In addition, when the coupling portion is detached from the plate-like portion, there is no part which interferes with the three-dimensional substrate, so that scanning with plate-like portions aligned can detect a reaction result at higher speed.

Although the embodiments of the present invention have been described with reference to the accompanying drawings, the present invention is not limited to these embodiments. The embodiments can be variously modified and changed within the spirit and scope of the invention.

The first embodiment has exemplified the case wherein a biorelated substance is labeled by using a fluorescent dye. However, various detection methods and labels can be applied to the present invention. When detection is to be performed by a chemiluminescence method, since luminescence is caused by a reaction between an enzyme and a substrate, it is not necessary to use any light source which illuminates a sample with light. In addition, even when detection is to be performed with fluorescence, various kinds of fluorescent materials can be used as labels. In addition to various kinds of fluorescent dyes, fluorescent glass particles and the like can be used. Furthermore, when detection is to be performed with scattered light or reflected light, metal particles or dielectric particles are used as a label. For example, fine gold, silver, platinum, and silicon particles and latex particles can be used. Metal fine particles such as fine gold, silver, or platinum particles with a particle size of 10 to 100 nm are especially preferable because the velocity of a particle in motion becomes optimal. Likewise, latex particles with a particle size of 0.1 to 1 µm are especially preferable because the velocity of a particle in motion becomes optimal. A suitable particle diameter is determined by the specific gravity of a particle and the velocity of Brownian motion. In this case, the motion state of particles includes is, for example, Brownian motion or vibration.

### Industrial Applicability

According to the present invention, a technique associated with biorelated substances, which can easily handle many specimens at high speed, can be provided.

## Claims

1. A reaction vessel for detecting a biorelated substance, comprising:
a three-dimensional substrate on which a probe for detecting a biorelated substance is immobilized;
a coupling portion allowed to be coupled to liquid driving means in an airtight fashion; and
a solution sucking portion allowed to suck a solution,
the coupling portion and the solution sucking portion being arranged with a three-dimensional substrate held between them.

2. A reaction vessel according to claim 1, wherein the solution sucking portion comprises at least two parts and at least one of the parts is attached on the three-dimensional substrate with kept in an airtight fashion.

3. A reaction vessel according to claim 2, wherein at least one of the parts kept in an airtight fashion and attached on the three-dimensional substrate is detachable from the three-dimensional substrate.

4. A reaction vessel for detecting a biorelated substance, comprising:
a three-dimensional substrate on which a probe for detecting a biorelated substance is immobilized;
a coupling portion allowed to be coupled to liquid driving means in an airtight fashion; and
a solution sucking portion allowed to suck a solution,
the coupling portion and the solution sucking portion being arranged with a three-dimensional substrate held between them and coupled to detection means so as to prevent leakage of light.

5. A reaction vessel according to claim 1, wherein the coupling portion and the solution sucking portion comprise a non-optical-transparent material.

6. A reaction vessel according to claim 5, wherein the coupling portion has a tapered inner surface which gradually increases in diameter with an increase in distance from the three-dimensional substrate.

7. A reaction vessel according to claim 6, wherein the coupling portion includes an opening end which is to be coupled to the detection means, the detection means includes a lens, and a taper angle between the three-dimensional substrate and the opening end is larger than an NA of the lens.

8. A reaction vessel according to claim 1, wherein the coupling portion and the solution sucking portion comprise a conductive material.

9. A reaction vessel according to claim 1, further comprising a filter for filtering a solution, the filter being placed in the solution sucking portion.

10. A reaction vessel according to any one of claims 1 to 9, wherein a portion where the three-dimensional substrate is positioned has a diameter of 1 to 6 mm.

11. A reaction vessel according to any one of claims 1 to 9, wherein a substantial volume of the reaction vessel is 10 to 100 µL.

12. A biorelated substance reaction apparatus which uses a reaction vessel defined in claim 1, comprising a fitting portion allowed to be fitted on the coupling portion of the reaction vessel, pressure control means for transferring a pressure for sucking and discharging a sample solution to the reaction vessel through the fitting portion, and temperature regulating means for regulating a temperature of the sample solution in the reaction vessel.

13. A reaction apparatus according to claim 12, wherein the sample solution is stored in a micro-titer plate.

14. A biorelated substance detection apparatus using a reaction vessel defined in claim 1, comprising a fitting portion allowed to be fitted on the coupling portion of the reaction vessel, and detection means for detecting a reaction of a biorelated substance on the three-dimensional substrate in the reaction vessel.

15. A biorelated substance detection apparatus according to claim 14, further comprising pressure control means for transferring a pressure for sucking and discharging a sample solution to the reaction vessel through the fitting portion, and temperature regulating means for regulating a temperature of the sample solution in the reaction vessel.

16. A biorelated substance detection apparatus according to claim 14, wherein the detection means is positioned in the fitting portion, and the fitting portion further includes illumination means for illuminating a three-dimensional substrate in the reaction vessel.

17. A biorelated substance detection apparatus according to claim 15, wherein the sample solution is stored in a micro-titer plate.

18. A method of manufacturing a reaction vessel defined in claim 1, comprising:
immobilizing a probe for detecting a biorelated substance on a three-dimensional substrate;
attaching a coupling portion on one surface of the three-dimensional substrate on keeping an airtight fashion; and
attaching a solution sucking portion on the other surface of the three-dimensional substrate on keeping an airtight fashion.

19. A method of manufacturing a reaction vessel defined in claim 1, comprising:
attaching a coupling portion on one surface of a three-dimensional substrate on keeping an airtight fashion;
immobilizing a probe for detecting a biorelated substance on the three-dimensional substrate; and
attaching a solution sucking portion on the other surface of the three-dimensional substrate on keeping an airtight fashion.

20. A method of manufacturing a reaction vessel defined in claim 1, comprising:
attaching a solution sucking portion on one surface of a three-dimensional substrate on keeping an airtight fashion;
immobilizing a probe for detecting a biorelated substance on the three-dimensional substrate; and
attaching a coupling portion on the other surface of the three-dimensional substrate on keeping an airtight fashion.

21. A method of manufacturing a reaction vessel defined in claim 1, comprising:
attaching protective members on both surfaces of a three-dimensional substrate so as to expose part of the three-dimensional substrate;
immobilizing a probe for detecting a biorelated substance on the three-dimensional substrate;
attaching a coupling portion on one of the protective members on keeping an airtight fashion; and
attaching a solution sucking portion on the other protective member on keeping an airtight fashion.
